(19) Europäisches Patentamt / European Patent Office / Office européen des brevets

(11) **EP 4 141 736 A1**

(12) **EUROPEAN PATENT APPLICATION**
published in accordance with Art. 153(4) EPC

(43) Date of publication:
**01.03.2023 Bulletin 2023/09**

(51) International Patent Classification (IPC):
*G06K 9/00* (2006.01)

(21) Application number: **20933833.4**

(86) International application number:
**PCT/CN2020/087506**

(22) Date of filing: **28.04.2020**

(87) International publication number:
**WO 2021/217420 (04.11.2021 Gazette 2021/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: HUAWEI TECHNOLOGIES CO., LTD.
Shenzhen, Guangdong 518129 (CN)

(72) Inventors:
• **YUAN, Weiping**
  **Shenzhen, Guangdong 518129 (CN)**
• **WU, Zuguang**
  **Shenzhen, Guangdong 518129 (CN)**
• **ZHOU, Peng**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **LANE TRACKING METHOD AND APPARATUS**

(57)    This application provides a lane line tracking method and apparatus. The method includes: obtaining a first prediction value, where the first prediction value is used to indicate a lane line model in a vehicle coordinate system, and is obtained through prediction by using motion information of an autonomous driving vehicle at a prior moment; obtaining first detection information, where the first detection information includes a pixel of a lane line in an image coordinate system at a current moment; determining a first mapping relationship based on the first prediction value and the first detection information, where the first mapping relationship is used to indicate a real-time mapping relationship between the image coordinate system and the vehicle coordinate system; and determining a second prediction value based on the first mapping relationship, where the second prediction value is used to indicate a correction value of the first prediction value. A real-time mapping relationship between two coordinate systems is obtained by using a prediction value and detection information, so that impact of road surface changes and the like can be eliminated, to improve accuracy of lane line tracking. In addition, the method does not need to be based on a plane assumption and a lane line parallel assumption, so that the method is more universal.

Obtain a first prediction value, where the first prediction value is used to indicate a lane line model in a vehicle coordinate system — 701

Obtain first detection information, where the first detection information includes a pixel of a lane line in an image coordinate system at a current moment — 702

Determine a first mapping relationship based on the first prediction value and the first detection information — 703

Determine a second prediction value based on the first mapping relationship — 704

FIG. 7

**Description**

**TECHNICAL FIELD**

This application relates to the field of artificial intelligence, and in particular, to a lane line tracking method and apparatus.

**BACKGROUND**

Lane line detection and lane line tracking are widely paid attention in vehicle driving, especially autonomous driving, and with popularization of autonomous driving, requirements for stability and precision of lane line tracking are increasingly high.

In existing lane line tracking solution, it is generally necessary to assume that a road surface is horizontal and lane lines are parallel. However, in urban roads, because of complexity of road structures, that a road surface is uneven is a very common phenomenon, and lane lines in a road are often not parallel. For example, it is common to have an extra left-turn lane or an extra right-turn lane at a traffic light intersection. For another example, in urban planning, a quantity of lanes of even a same road may be increased or decreased based on an actual situation. All these cases make some lane lines non-parallel. If a lane line is still tracked based on a premise of assuming that a road surface is horizontal and lane lines are parallel, a large error will be caused. In short, an existing lane line tracking method has relatively low accuracy and lacks universality.

Therefore, how to improve accuracy and universality of lane line tracking is an urgent problem to be solved.

**SUMMARY**

This application provides a lane line tracking method and apparatus. On one hand, lane line tracking accuracy can be effectively improved, and on the other hand, the method and apparatus have good universality.

According to a first aspect, a lane line tracking method is provided. The method includes: obtaining a first prediction value, where the first prediction value is used to indicate a lane line model in a vehicle coordinate system, and is obtained through prediction by using motion information of an autonomous driving vehicle at a prior moment; obtaining first detection information, where the first detection information includes a pixel of a lane line in an image coordinate system at a current moment; determining a first mapping relationship based on the first prediction value and the first detection information, where the first mapping relationship is used to indicate a real-time mapping relationship between the image coordinate system and the vehicle coordinate system; and determining a second prediction value based on the first mapping relationship, where the second prediction value is used to indicate a correction value of the first prediction value.

In the technical solution of this application, a prediction value of a lane line in the vehicle coordinate system and detection information of the lane line in the image coordinate system are combined, and a real-time mapping relationship between the two coordinate systems is obtained by using the prediction value and the detection information, so that impact of road surface changes can be eliminated, and accuracy of lane line tracking can be improved. A reason is that these road surface changes cause a change in a mapping relationship between the two coordinate systems, and obtaining the mapping relationship in real time is equivalent to capturing the change in the mapping relationship in real time, so that impact of road unevenness on a tracking result can be effectively eliminated, and a more accurate lane line prediction value can be obtained. In addition, in the technical solution of this application, without being limited by an assumption of parallel lane lines, the method is also applicable to non-parallel lane lines, and therefore, has better generality or referred to as universality.

Optionally, the detection information of the lane line may include pixel information of the lane line, and may further include a line type of the lane line.

It should be noted that the current moment is determined by using a moment corresponding to an image frame. For example, it is assumed that a moment corresponding to a frame of image is used as the current moment. In this case, the prior moment refers to a moment that corresponds to a frame of image in image frames and that is earlier than the current moment, and the prior moment may include a previous moment; and a latter moment refers to a moment that corresponds to a frame of image in the image frames and that is later than the current moment, and the latter moment may include a next moment.

Optionally, the detection information may be obtained in real time, or the detection information may be obtained from a storage apparatus.

It should be further noted that information about the autonomous driving vehicle may be understood as information used to describe a status, a motion, and the like of the vehicle. The information about the autonomous driving vehicle may include the motion information of the autonomous driving vehicle, and the motion information of the autonomous driving vehicle may be understood as dynamics information, for example, may include any one or more pieces of dynamics information such as a vehicle speed or an angular speed (for example, a yaw angular speed) of the vehicle.

It should be understood that the first prediction value is obtained by using the motion information of the autonomous driving vehicle at the prior moment, which is equivalent to that at the prior moment, a lane line prediction value in the vehicle coordinate system is obtained by using a lane line prediction method, and after the first detection information is obtained at the current moment, the first prediction value and the first detection information are comprehensively considered to determine the second prediction value, and a more accurate prediction value at the current moment is determined by using a lane line prediction value at the current moment and lane line detection information at the current moment (or it may be understood as obtaining a more accurate lane line model). Assuming that the current moment is changed, the original prior moment is used as the current moment, and the original current moment is used as the next moment, that is, the time advances for one moment, this is equivalent to obtaining a lane line prediction value at the next moment by using information about the autonomous driving vehicle at the current moment, and then determining a more accurate prediction value at the next moment by using lane line detection information in the image coordinate system at the next moment and lane line prediction value at the next moment (or this may be understood as obtaining a more accurate lane line model).

It should be further understood that the first prediction value may be read from, for example, the storage apparatus, or may be obtained by performing an operation by using the motion information of the autonomous driving vehicle, and the like. The first prediction value may be generated at the prior moment, or may be generated at the current moment, to be specific, after information such as the motion information of the autonomous driving vehicle at the prior moment is obtained before the current moment, prediction is performed to obtain the first prediction value; alternatively, only the motion information of the autonomous driving vehicle is stored at the prior moment, no operation is performed, and an operation is performed at the current moment, and the like, which are not enumerated herein one by one.

It should be further understood that the lane line model may be understood as a mathematical model of a lane line, or may be understood as a manner of indicating a lane line. For example, the lane line may be indicated by using a curve equation or a polynomial. Therefore, the lane line model may also be referred to as a lane line equation, a lane line curve equation, a lane line polynomial, or the like.

Optionally, the lane line model may be indicated by using parameters such as a location (intercept), an angular degree, a curvature, a change rate of the curvature, and a curvature radius of the lane line.

Optionally, the lane line model may further be indicated by using parameters such as a lane width, a location at which a vehicle center deviates from a lane center, a lane line angular degree, and a curvature. It should be understood that there may be another manner of indicating the lane line, provided that a relative location and a change trend of the lane line can be indicated, and there is no limitation.

Optionally, the lane line prediction method or referred to as a lane line prediction algorithm may be used to obtain a prediction value, namely, the first prediction value, of the lane line in the vehicle coordinate system at the current moment based on a time interval between the current moment and the prior moment and information about the autonomous driving vehicle at the prior moment.

Optionally, the lane line prediction method may obtain the prediction value of the lane line by using, for example, an IMM algorithm or referred to as an IMM prediction method.

It should be noted that, the lane line prediction algorithm may also be considered as processing some input data by using a model of the lane line prediction algorithm, to obtain a prediction value of the lane line model. For example, a model of the IMM algorithm may be referred to as an IMM prediction model, an IMM algorithm model, or the like. It can be learned that, in this embodiment of this application, the model of the lane line prediction algorithm and the lane line model are different concepts, and the model of the lane line prediction algorithm is a model of a prediction algorithm used to obtain the lane line model. The lane line model is a curve equation, which is alternatively referred to as a mathematical expression, of the lane line in the vehicle coordinate system. Therefore, the prediction value of the lane line model may be understood as being obtained by using the model of the lane line prediction algorithm.

With reference to the first aspect, in some implementations of the first aspect, the first prediction value may be obtained by using the model of the lane line prediction algorithm. Optionally, the model of the lane line prediction algorithm (for example, the IMM algorithm) at the current moment may be updated by using the second prediction value. Updating the model of the lane line prediction algorithm in the vehicle coordinate system by using a more accurate prediction value (second prediction value) of the lane line model is equivalent to updating a model parameter of the lane line prediction algorithm in the vehicle coordinate system in real time, so that convergence of a prediction algorithm (for example, an IMM prediction algorithm) can be accelerated, and accuracy of the lane line model predicted by using a model of the prediction algorithm can be improved.

Optionally, an EKF filter may be used to perform filtering processing on the lane line model in the vehicle coordinate system, to improve the accuracy of the lane line model.

Optionally, the model of the lane line prediction algorithm may be further updated based on the second prediction value. When the model is used in a subsequent prediction process, a more accurate prediction value of the lane line model may be obtained. With reference to the first aspect, in some implementations of the first aspect, the first prediction value is obtained when the time interval falls within a preset range, to be specific, whether to perform lane line prediction is first determined based on the time interval, and prediction is performed only when the time interval falls within the preset range. In the foregoing process, whether to perform prediction is determined by determining whether the time interval between the prior moment and the current moment falls within the preset range. The reason is that when the time interval is excessively large, the vehicle may actually have traveled a relatively long distance, the lane line may have changed greatly, and the vehicle may not be driven on a same road. In this case, such prediction may cause a large error and the like. However, when the time interval is excessively small, the vehicle may actually hardly move forward. In this case, although such prediction is still accurate, because a change is small and a parameter may be almost unchanged, such excessively frequent prediction leads to a waste of resources to some extent. Therefore, prediction is performed only when the time interval falls within the preset range, so that occupied resources can be reduced while a relatively accurate lane line prediction value is obtained.

Optionally, whether prediction needs to be performed may be determined based on a time interval determined by timestamps of an input image, to be specific, whether a state value of the filter needs to be changed is determined based on a time interval determined by moments corresponding to a prior frame of image and a latter frame of image of the input image, to obtain a lane line prediction value. The state value of the filter may also be understood as a coefficient of the filter, or a state, a parameter, or the like of the filter. The timestamps may be understood as moments corresponding to image frames.

It should be noted that, assuming that a moment with a later timestamp in the two frames of images is used as the current moment, a moment with an earlier timestamp may be used as the prior moment. Alternatively, the moment with the later timestamp may be used as a latter moment, and the moment with the earlier timestamp may be used as the current moment. That is, the two frames of images may or may not be consecutive. When the two frames of images are consecutive, it may be considered that the two frames of images are an image at a previous moment and an image at the current moment respectively, or it may be considered that the two frames of images are an image at the current moment and an image at the next moment respectively.

With reference to the first aspect, in some implementations of the first aspect, a homography matrix may be used to indicate the mapping relationship between the vehicle coordinate system and the image coordinate system.

Optionally, area division may be performed, and homography matrices of different areas may be calculated. For example, the front of the vehicle may be divided into a plurality of areas by distance, to obtain a plurality of homography matrices corresponding to the plurality of areas, where each of the plurality of areas corresponds to at least one homography matrix. When a real-time mapping relationship is obtained, it may be implemented by obtaining at least one real-time homography matrix, to be specific, the homography matrices of the different areas are calculated in real time, and the real-time homography matrix is used to indicate the real-time mapping relationship (for example, the first mapping relationship described above).

Dividing the front of the vehicle into the plurality of areas can more fully reflect an actual situation on a road surface, thereby further improving accuracy of a mapping relationship, and further improving accuracy of lane line tracking. In other words, a more accurate mapping relationship between the two coordinate systems can be obtained by setting a homography matrix by area, thereby improving the accuracy of lane line tracking.

Optionally, an initial homography matrix may be first obtained, and then a fourth prediction value corresponding to the first prediction value is obtained based on the first prediction value and the initial homography matrix. The fourth prediction value may be understood as a value used to indicate a corresponding value of the first prediction value in an initial mapping relationship, or may be understood as a corresponding value of the first prediction value in an initial image coordinate system. Because the initial homography matrix may be considered as being used to indicate a mapping relationship between a vehicle coordinate system plane and an initial image plane (the initial image coordinate system), the fourth prediction value is equivalent to a corresponding value of the first prediction value in the initial image plane. An operation of obtaining the fourth prediction value may be further considered as that a lane line in the vehicle coordinate system is transferred to the initial image plane. Then, a homography matrix at the current moment is determined by using the first detection information and the fourth prediction value. To be specific, when a road surface gradient changes, the initial mapping relationship between the vehicle coordinate system and the image coordinate system is changed. In this case, a deviation occurs between the fourth prediction value and the first detection information in the image coordinate system at the current moment. Then, a more accurate homography matrix (namely, a real-time homography matrix) at the current moment may be obtained by, for example, minimizing a difference between the fourth prediction value and the first detection information, to obtain a mapping relationship (namely, a real-time mapping relationship) at the current moment.

It should be noted that the real-time mapping relationship may be understood as a mapping relationship obtained in real time, in other words, may be understood as a mapping relationship obtained continuously with time, or may be understood as a mapping relationship corresponding to a different moment.

Optionally, after the homography matrix at the current moment is obtained, the first prediction value may be transferred from the vehicle coordinate system to the image coordinate system by using the homography matrix at the current moment. When a plurality of homography matrices are included, for example, when a plurality of homography matrices are obtained through area division, a homography matrix of each of the plurality of areas may be obtained by using the same method described above. Then, the prediction values of the lane line are transferred by area to the image coordinate system by using the plurality of homography matrices.

It should be noted that, in a driving process of the vehicle, a road surface change is reflected as a change of a plane determined by an image and a change of the mapping relationship between the vehicle coordinate system and the image coordinate system, the initial homography matrix is equivalent to that the initial mapping relationship between the vehicle coordinate system and the image coordinate system is determined, and the homography matrix at the current moment is equivalent to that the real-time mapping relationship between the vehicle coordinate system and the image coordinate system is determined. Therefore, in the foregoing method, a loss function is constructed and minimized by using a difference between a corresponding value, of the prediction value of the lane line model, in the initial image coordinate system and a corresponding value, of the prediction value of the lane line model, in the image coordinate system at the current moment, and the mapping relationship at the current moment, namely, the homography matrix at the current moment, between the vehicle coordinate system and the image coordinate system is obtained in an iterative manner. It may also be understood that, in the foregoing method, the loss function is constructed and minimized based on a difference between a corresponding value, of the prediction value of the lane line model, in the initial mapping relationship and a corresponding value, of the prediction value of the lane line model, in the mapping relationship at the current moment, and the mapping relationship at the current moment is obtained in an iterative manner. However, it should be understood that a method for obtaining a homography matrix at another moment (or a mapping relationship at another moment) may be the same as a method for obtaining the homography matrix at the current moment, which is equivalent to that the "another moment" is considered as the "current moment", or it may be considered that the "current moment" in the foregoing steps is replaced with the "another moment".

With reference to the first aspect, in some implementations of the first aspect, when the second prediction value of the lane line model at the current moment is determined based on the first mapping relationship, the first prediction value, and the first detection information, a third prediction value may be first obtained based on the first mapping relationship and the first prediction value, where the third prediction value is used to indicate a corresponding value of the first prediction value in the first mapping relationship. Optionally, the first prediction value may be transferred to the image coordinate system at the current moment by using the first mapping relationship (for example, by using the real-time homography matrix), to obtain the third prediction value corresponding to the first prediction value. The third prediction value is a corresponding value that is of the first prediction value, that is in the image coordinate system at the current moment, and that is determined based on the first prediction value and the first mapping relationship (for example, by using the real-time homography matrix).

Optionally, after the third prediction value is obtained, the third prediction value may be adjusted based on the first detection information, to obtain the second prediction value.

Optionally, a Mahalanobis distance between a pixel of a lane line corresponding to the prediction value (the third prediction value) of the lane line model in the image coordinate system at the current moment to which the first prediction value is transferred and a pixel of the lane line corresponding to original lane line detection information (the first detection information) in the image coordinate system may be calculated, and a lane line prediction value corresponding to a minimum Mahalanobis distance is used as the second prediction value, namely, a prediction value after correction, of the lane line model.

It should be noted that herein it is equivalent to corresponding at least one lane line in the vehicle coordinate system to each lane line in the image coordinate, so that information about a line with a minimum Mahalanobis distance is used as a measurement quantity this time. For example, it is assumed that two lane lines, a left lane line and a right lane line, may be obtained in the vehicle coordinate system, and there are three lane lines in the image coordinate system. In this case, two of the three lane lines can be respectively corresponded to the left lane line and the right lane line according to the foregoing method.

Optionally, the lane line model (lane line equation) in the vehicle coordinate system may be further updated based on the second prediction value. Updating the lane line model may include updating parameters such as a slope and an intercept of the lane line model (lane line curve equation).

With reference to the first aspect, in some implementations of the first aspect, that the second prediction value is used to perform path planning includes: obtaining path planning information, and generating a path planning solution in a next period of time or at a next moment based on the second prediction value and the path planning information. The path planning information may include at least one of road information, traffic information, or information about the autonomous driving vehicle. The road information may include at least one of roadblock information, road width information, or road length information. The traffic information may include at least one of traffic light information, traffic rule information, driving information of another surrounding vehicle, or road condition information. The information about the autonomous driving vehicle may include at least one of motion information, location information, shape information, or structure information of the autonomous driving vehicle. The motion information of the autonomous driving vehicle may include an angular speed, a speed, and the like of the vehicle. The location information may be understood as a current location of the vehicle. The shape information may be understood as a form, a shape, a size, and the like of the vehicle. The structure information may be understood as various components of the vehicle, for example, a vehicle head, a vehicle body, and the like.

Optionally, freespace information at the current moment may be further obtained, so that a lane-level path planning solution in the next period of time or at the next moment is determined based on the second prediction value, the path planning information, and the freespace information.

In the path planning method, a more accurate prediction value of the lane line model can be obtained by using the lane line tracking method provided in the first aspect, so that accuracy of a planned path can be improved.

With reference to the first aspect, in some implementations of the first aspect, that the second prediction value is used to perform warning policy planning includes: obtaining warning information, and generating a warning signal based on the second prediction value, the road information, and a preset warning threshold; and generating warning policy planning information based on the warning signal, where the warning policy planning information is used to indicate a response policy to the warning signal, and the warning information may include at least one of the location information of the vehicle, the traffic information, and the roadblock information.

In the warning policy planning method, a more accurate prediction value of the lane line model can be obtained by using the lane line tracking method provided in the first aspect, so that accuracy of warning can be improved.

According to a second aspect, a lane line tracking apparatus is provided. The apparatus includes a unit configured to perform the method in any implementation of the first aspect.

According to a third aspect, a chip is provided. The chip includes a processor and a data interface. The processor reads, through the data interface, instructions stored in a memory, to perform the method in any implementation of the first aspect.

Optionally, in an implementation, the chip may further include a memory. The memory stores instructions. The processor is configured to execute the instructions stored in the memory. When the instructions are executed, the processor is configured to perform the method in any implementation of the first aspect.

According to a fourth aspect, a computer-readable medium is provided. The computer-readable medium stores program code to be executed by a device, and the program code includes instructions used to perform the method in any implementation of the first aspect.

According to a fifth aspect, a computer program product including instructions is provided. When the computer program product is run on a computer, the computer is enabled to perform the method in any implementation of the first aspect.

## BRIEF DESCRIPTION OF DRAWINGS

FIG. 1 is a schematic diagram of a method for establishing a vehicle coordinate system;
FIG. 2 is a function block diagram of a vehicle to which an embodiment of this application is applicable;
FIG. 3 is a schematic diagram of an autonomous driving system according to an embodiment of this application;
FIG. 4 is a schematic diagram of application of a cloud-side instruction autonomous driving vehicle according to an embodiment of this application;
FIG. 5 is a schematic diagram of a lane line detection and tracking apparatus according to an embodiment of this application;
FIG. 6 is a schematic flowchart of a lane line detection method according to an embodiment of this application;
FIG. 7 is a schematic flowchart of a lane line tracking method according to an embodiment of this application;
FIG. 8 is a schematic flowchart of predicting a lane line by using an IMM according to an embodiment of this application;
FIG. 9 is a schematic diagram of a calculation process of a homography matrix according to an embodiment of this application; and
FIG. 10 is a schematic flowchart of a method for updating a lane line model in a vehicle coordinate system according to an embodiment of this application.

## DESCRIPTION OF EMBODIMENTS

For ease of understanding, some technical terms in the embodiments of this application are first described.

1. Lane line detection (lane detection, LD)

The lane line detection is a method for obtaining a relative location of a lane line in an image, and may also be understood as obtaining coordinates (pixels) of a lane line in an image. For example, a location, or referred to as a pixel, of a lane line in an image may be obtained after processing with a detection algorithm. A lane line may be detected from an image plane by using a neural network (neural network) or a conventional algorithm. In the embodiments of this application, an example in which a pixel of a lane line in an image plane is obtained by using a neural network is used for description.

2. Lane line tracking (lane tracking, LT)

The lane line tracking is a method for processing an obtained lane line, and can reduce impact caused by missing detection, false detection, and the like.

The lane line detection is equivalent to detecting a lane line in each frame of image, and when a vehicle keeps moving forward, corresponding detection results are continuously generated. However, in an actual situation, one or more frames of images may not be detected or errors occur in detection (for example, another line is detected as a lane line), so that a previously detected lane line may not correspond to a later detected lane line or may correspond to another object. In this case, the lane line tracking can be used to correct these errors. A principle of the lane line tracking is that a lane line is abstracted into a mathematical model or referred to as a geometric model (for example, a lane line model described below), real historical data (for example, motion information of an autonomous driving vehicle at a prior moment, as described below) is used to obtain a prediction value (for example, a following first prediction value described below) of the lane line model, and then the lane line is matched with a lane line detected in an image at a current moment according to a specific matching rule (for example, a mapping relationship between an image coordinate system and a vehicle coordinate system, as described below), and if the matching rule can be met, the two lane lines are considered as a same lane line. In short, the lane line tracking can be considered as a process of continuously obtaining lane line models, and the obtained lane line models can be used to correct the errors in lane line detection.

In a lane line tracking method, currently, the following two methods are commonly used to output a lane line model.

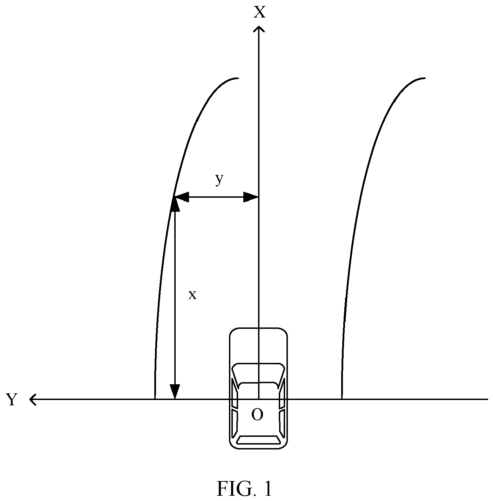

(1) A shot original image is converted into a bird-eye (bird-eye) image, curve fitting is performed on pixels for three times or two times in the bird-eye image, and finally, a fitted lane line is converted into the original image for output. (2) A lane line in a vehicle coordinate system is output. FIG. 1 is a schematic diagram of establishing a vehicle coordinate system. As shown in FIG. 1, a plane rectangular coordinate system is established in a vehicle body, where an X axis points to a front direction of a vehicle, and a Y axis points from a front passenger cabin to a driver. Directions of the X axis and the Y axis may also be opposite to directions shown in the figure. For example, the Y axis points from the driver to the front passenger. Two curves in the vehicle coordinate system are lane lines, each lane line may be described by using a cubic equation, and a curve equation may be:

$$y = \frac{1}{6}a * x^3 + \frac{1}{2}b * x^2 + c * x + d \qquad (1)$$

In the formula, a represents a curvature change of a lane line model, b represents a curvature of the lane line model, c represents a slope of the lane line model, and d represents an intercept of the lane line model. It should be noted that, when the foregoing curve equation is used to describe the lane line, both a straight line and a curve may be described. When a value of the curvature b is 0, it indicates that the lane line is a straight line. Therefore, the straight line may be considered as a special case of the foregoing curve.

The curve equation of the lane line may also be referred to as a lane line equation, and may be considered as an example of the lane line model in this embodiment of this application. That is, in this lane line tracking method, lane line tracking is implemented by obtaining the lane line equation in the vehicle coordinate system. Result output manners of the foregoing two types of lane line tracking may be considered as a process in which a detected lane line and an actual lane line can be corresponding in real time and continuously. Alternatively, it may be understood that lane line tracking is a process of continuously obtaining lane line models.

In a solution of the embodiments of this application, the lane line tracking method and apparatus output the lane line models in the vehicle coordinate system.

3. Image coordinate system and vehicle coordinate system

The image coordinate system is used to indicate a relative location of a lane line in an image, in other words, coordinates of the lane line in the image coordinate system are used to indicate the relative location of the lane line in the image. Therefore, the image coordinate system may be understood as a coordinate system that is established by using a plane on which the image is located and that is used to indicate the relative location of the lane line.

The vehicle coordinate system is used to indicate a location of a lane line relative to a vehicle, in other words, coordinates of the lane line in the vehicle coordinate system are used to indicate the location of the lane line relative to the vehicle. Therefore, the vehicle coordinate system may be understood as a coordinate system that is established by using a vehicle body and that is used to indicate a relative location of the lane line. For example, the vehicle coordinate system may be established by using the foregoing method.

4. Homography matrix (homography matrix, HM)

The homography matrix is a mathematical concept in projective geometry or referred to as projection geometry. The homography matrix is used to express perspective transformation between a plane in a real world and an image corresponding to the plane, and transform the image from one view to another through the perspective transformation. Therefore, it may also be understood that the homography matrix may be used to implement conversion between different planes.

In the field of computer vision, plane homography is defined as a projection mapping from one plane to another. Therefore, mapping a point on a two-dimensional plane to a video camera imager is an example of the plane homography. If a point on a calibration plate is mapped to a point on the imager by using homogeneous coordinates, the mapping can be indicated by using the homography matrix.

The degree of freedom of the homography matrix is 8 means that to obtain a unique solution, four point pairs (corresponding to eight equations) are needed to solve the homography matrix.

In the embodiments of this application, the homography matrix is used to represent a mapping matrix between the vehicle coordinate system and the image coordinate system, or may be understood as being used to represent a mapping matrix between a plane determined by the vehicle coordinate system and a plane determined by the image coordinate system.

Due to a road condition, a road surface gradient continuously changes, which, reflected in lane line detection and tracking, is equivalent to that the planes determined by the vehicle coordinate system and the image coordinate system continuously change, and the planes each change differently. Therefore, the gradient may change. Therefore, in the embodiments of this application, the homography matrix is used to represent a mapping relationship between the vehicle coordinate system and the image coordinate system, and a manner of obtaining (updating) the homography matrix in real time is used to obtain (update and capture) a change of the mapping relationship between the vehicle coordinate system and the image coordinate system in real time.

5. Interactive filtering (interacting multiple model, IMM)

In interactive filtering, it is assumed that a target has a plurality of motion states, each motion state corresponds to a model, a motion state of the target at any time can be represented by one of given models, and a filtering result of the target is obtained by synthesizing a plurality of filtering model results, for example, performing weighted synthesis on the plurality of filtering model results. Because it can be assumed that a maneuvering of the target is that the target is suitable for different motion models at different stages, an IMM algorithm can be used to solve problems in target tracking. In the embodiments of this application, lane line tracking prediction is performed by using the IMM algorithm. In other words, in the embodiments of this application, the lane line is equivalent to the foregoing "target".

6. Extended Kalman filtering (extended Kalman filter, EKF)

Kalman filtering (Kalman filter, KF) is an algorithm that performs an optimal estimation on a system state by using a linear system state equation and by inputting or outputting observation data through a system. Because the observation data includes influence of noise and interference in the system, the optimal estimation can also be considered as a filtering process. The EKF is a filtering method based on the KF and can be used in a nonlinear system. The EKF mainly linearizes the nonlinear system and then performs Kalman filtering. In the embodiments of this application, the EKF is used to filter lane lines in the vehicle coordinate system to obtain a lane line model.

The lane line tracking method and/or apparatus provided in the embodiments of this application may be applied to means of transportation such as a vehicle. In addition, the method and/or apparatus may be applied to manual driving, assisted driving, and autonomous driving. The following describes several possible application scenarios.

Application scenario 1: Path planning/driving planning

The lane line tracking method provided in the embodiments of this application may be applied to scenarios such as path planning/driving planning. For example, a lane line tracking result obtained by the lane line tracking method may be sent to a path planning module or apparatus, so that the path planning module or apparatus can plan a path or adjust an existing path planning solution based on the lane line tracking result (for example, the second prediction value of the lane line described below or the lane line model in the vehicle coordinate system described below). For another example, the lane line tracking result obtained by the lane line tracking method may be sent to a driving planning module or apparatus, so that the driving planning module or apparatus can determine a freespace (freespace) of a vehicle based on the lane line tracking result, or can further guide a subsequent vehicle behavior based on the lane line tracking result, for example, generate an execution action in autonomous driving or guide a driver to drive.

The freespace may also be referred to as a passable space, and is an expression manner of describing a surrounding environment of the vehicle. For example, a passable space of a vehicle generally includes information such as another vehicle, a pedestrian, and a roadside. Therefore, the passable space of the vehicle is mainly used to clearly describe a space that is near the vehicle and that can be freely passed through by the vehicle.

Application scenario 2: Navigation system

The lane line tracking method and/or apparatus provided in the embodiments of this application may be further applied to a navigation system. After a vehicle obtains a lane line tracking result (for example, the second prediction value of the lane line described below or the lane line model in the vehicle coordinate system described below), the result may be reported to a navigation control module or apparatus. The navigation control module or apparatus may indicate, based on the received lane line tracking result and with reference to other information such as a road condition, a driver to perform subsequent driving, and/or may indicate an autonomous driving vehicle to generate a corresponding execution action. The navigation control module or apparatus may be a data processing device, for example, a cloud device, a server, or a terminal device, and the navigation control module may alternatively be an in-vehicle module or apparatus disposed on the vehicle.

For further description, for example, the lane line tracking result and traffic information (for example, traffic light information) may be combined to guide the vehicle to drive according to a traffic rule. Especially when the lane line tracking method and/or apparatus is applied to autonomous driving, an autonomous driving vehicle can be controlled to drive to a correct lane based on a lane line tracking result, and to pass through a traffic light intersection at a correct time.

For another example, lane-level navigation information may be planned for the vehicle with reference to the lane line tracking result, road condition information, path information, and the like.

Application scenario 3: Warning policy planning

The lane line tracking method and/or apparatus provided in the embodiments of this application may be further configured to perform warning policy planning, for example, may be configured to perform lane departure warning based on a lane line tracking result and a current location of a vehicle, and send a warning signal when it is determined, based on the lane line tracking result and the current location of the vehicle, that the vehicle deviates from a lane. For further description, for example, when the vehicle approaches a solid-line lane line or presses a solid-line lane line, a warning is performed in a form, for example, a trigger indicator or a sound. An alarm signal may also be sent to another decision-making or control module to further control vehicle driving.

For another example, collision warning may be performed based on the lane line tracking result and a situation around the vehicle, and collision warning policy planning may be performed based on the lane line tracking result and information, in the vehicle, about another vehicle, a pedestrian, an obstacle, a road edge, a building, an isolation belt, and the like.

The following describes the technical solution in the embodiments of this application with reference to the accompanying drawings.

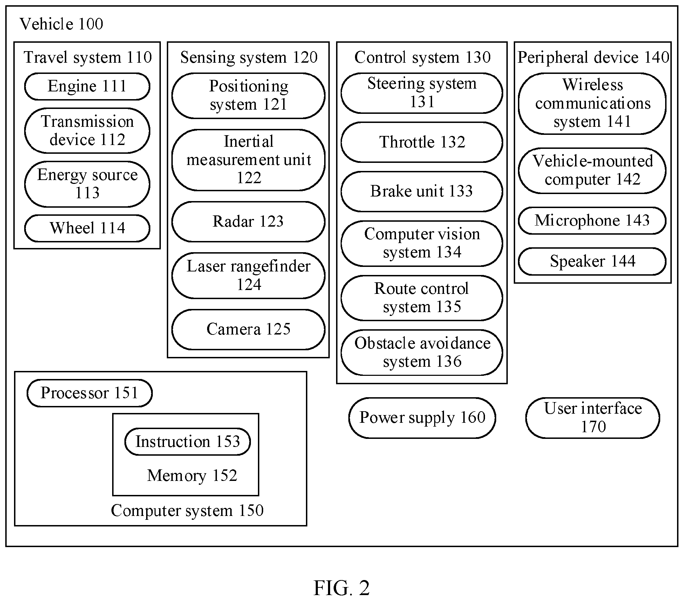

FIG. 2 is a function block diagram of a vehicle to which an embodiment of this application is applicable. The vehicle 100 may be a manually driven vehicle, or the vehicle 100 may be configured in a fully or partially autonomous driving mode.

For example, the vehicle 100 can control itself when in an autonomous driving mode, and through manual operations, can determine current states of the vehicle and a surrounding environment of the vehicle, determine possible behavior of at least one another vehicle in the surrounding environment, determine a confidence level corresponding to a possibility that the another vehicle performs the possible behavior, and control the vehicle 100 based on determined information. When the vehicle 100 is in the autonomous driving mode, the vehicle 100 may be set to operate without interaction with a person.

The vehicle 100 may include various subsystems, such as a travel system 110, a sensing system 120, and a control system 130, one or more peripheral devices 140, a power supply 160, a computer system 150, and a user interface 170.

Optionally, the vehicle 100 may include more or less subsystems, and each subsystem may include a plurality of elements. In addition, each subsystem and element of the vehicle 100 may be interconnected in a wired or wireless manner.

For example, the travel system 110 may include a component for providing power motion to the vehicle 100. In one embodiment, the travel system 110 may include an engine 111, a transmission device 112, an energy source 113, and a wheel/tire 114. The engine 111 may be an internal combustion engine, a motor, an air compression engine, or a combination of other types of engines, for example, a hybrid engine formed by a gasoline engine and a motor, or a hybrid engine formed by an internal combustion engine and an air compression engine. The engine 111 may convert the energy source 113 into mechanical energy.

For example, the energy source 113 includes gasoline, diesel, another oil-based fuel, propane, another compressed-gas-based fuel, ethanol, a solar panel, a battery, and another power source. The energy source 113 may also provide energy to another system of the vehicle 100.

For example, the transmission device 112 may include a gearbox, a differential, and a drive shaft, wherein the transmission device 112 may transmit the mechanical power from the engine 111 to the wheel 114.

In an embodiment, the transmission device 112 may further include another device, for example, a clutch. The drive shaft may include one or more shafts that may be coupled to one or more wheels 114.

For example, the sensing system 120 may include several sensors that sense information about a surrounding environment of the vehicle 100.

For example, the sensing system 120 may include a positioning system 121 (for example, global positioning system (global positioning system, GPS), a Beidou system, or another positioning system), an inertial measurement unit (inertial measurement unit, IMU) 122, a radar 123, a laser rangefinder 124, and a camera 125. The sensing system 120 may further include sensors (for example, an in-vehicle air quality monitor, a fuel gauge, and an oil temperature gauge) of an internal system of the monitored vehicle 100. One or more pieces of sensor data from these sensors can be used to detect an object and corresponding features (a location, a shape, a direction, a speed, and the like) of the object. Such detection and recognition are key functions of security operations of the autonomous vehicle 100.

The positioning system 121 may be configured to estimate a geographical location of the vehicle 100. The IMU 122 may be configured to sense changes in position and orientation of the vehicle 100 based on inertial acceleration. In an embodiment, the IMU 122 may be a combination of an accelerometer and a gyroscope.

Exemplarily, the radar 123 may use radio signals to sense an object within the surrounding environment of the vehicle 100. In some embodiments, in addition to sensing the object, the radar 123 can be further configured to sense a speed and/or an advancing direction of the object.

For example, the laser rangefinder 124 may use laser light to sense an object in an environment in which the vehicle 100 is located. In some embodiments, the laser rangefinder 124 may include one or more laser light sources, a laser scanner, one or more detectors, and other system components.

For example, the camera 125 may be configured to capture a plurality of images of the surrounding environment of the vehicle 100. For example, the camera 125 may be a static camera or a video camera.

As shown in FIG. 2, the control system 130 controls operations of the vehicle 100 and components of the vehicle. The control system 130 may include various elements, such as a steering system 131, a throttle 132, a brake unit 133, a computer vision system 134, a route control system 135, and an obstacle avoidance system 136.

For example, the steering system 131 may be operated to adjust an advancing direction of the vehicle 100. For example, in an embodiment, the steering system may be a steering wheel system. The throttle 132 may be configured to control an operation speed of the engine 111 and thus control a speed of the vehicle 100.

For example, the brake unit 133 may be configured to control the vehicle 100 to decelerate, and the brake unit 133 may use friction force to retard the wheel 114. In another embodiment, the brake unit 133 may convert kinetic energy of the wheel 114 into a current. The brake unit 133 may also slow down a rotational speed of the wheel 114 to control the speed of the vehicle 100.

As shown in FIG. 2, the computer vision system 134 may be operated to process and analyze images captured by the camera 125 in order to identify objects and/or features in the surrounding environment of the vehicle 100. The objects and/or features may include traffic signals, road boundaries, and obstacles. The computer vision system 134 may use an object recognition algorithm, a structure from motion (structure from motion, SFM) algorithm, video tracking, and another computer vision technology. In some embodiments, the computer vision system 134 may be configured to draw a map for an environment, track an object, estimate a speed of an object, and the like.

For example, the route control system 135 may be configured to determine a driving route of the vehicle 100. In some embodiments, the route control system 135 may determine a driving route for the vehicle 100 with reference to data from the sensors, the GPS, and one or more predetermined maps.

As shown in FIG. 2, the obstacle avoidance system 136 may be used to identify, evaluate, and avoid or otherwise to cross potential obstacles in an environment of the vehicle 100.

In an instance, the control system 130 may additionally or alternatively include components other than those shown and described. Alternatively, some of the components shown above may be removed. For example, a path planning module may be included, configured to plan a driving path of the vehicle. Further, the path planning may be road-level path planning or lane-level path planning. For another example, a driving planning module may be included, configured to determine a freespace or indicate the vehicle to drive according to a traffic rule. For another example, a navigation control module may be included, configured to indicate a driver to perform subsequent driving, and/or may indicate the autonomous driving vehicle to generate a corresponding execution action, or the like. For another example, a warning policy planning module may be included, configured to generate an alarm signal of warning policy planning, to avoid potential safety hazards such as a violation of the traffic rule.

As shown in FIG. 2, the vehicle 100 may interact with an external sensor, another vehicle, another computer system, or a user by using the peripheral device 140. The peripheral device 140 may include a wireless communications system 141, a vehicle-mounted computer 142, a microphone 143, and/or a speaker 144.

In some embodiments, the peripheral device 140 may provide a means for the vehicle 100 to interact with the user interface 170. For example, the vehicle-mounted computer 142 may provide information for the user of the vehicle 100. The user interface 116 may also be configured to operate the vehicle-mounted computer 142 to receive a user input, and the vehicle-mounted computer 142 can be operated through a touchscreen. In another case, the peripheral device 140 may provide a means for the vehicle 100 to communicate with another device in the vehicle. For example, the microphone 143 may receive audio (for example, a voice command or another audio input) from the user of the vehicle 100. Likewise, the speaker 144 may output audio to the user of the vehicle 100.

As illustrated in FIG. 2, the wireless communications system 141 may communicate wirelessly with one or more devices directly or through a communications network. For example, the wireless communications system 141 may use 3G cellular communications such as code division multiple access (code division multiple access, CDMA), EVD0, a global system for mobile communications (global system for mobile communications, or GSM)/a general packet radio service (general packet radio service, GPRS), 4G cellular communications such as long term evolution (long term evolution, LTE), or 5G cellular communications. The wireless communications system 141 may communicate with a wireless local area network (wireless local area network, WLAN) by using wireless Internet access (Wi-Fi).

In some embodiments, the wireless communications system 141 may directly communicate with a device by using an infrared link, Bluetooth, or ZigBee protocol (ZigBee). Other wireless protocols, such as various vehicle communications systems, for example, the wireless communications system 141, may include one or more dedicated short range communications (dedicated short range communications, DSRC) devices which may include public and/or private data communications between vehicles and/or roadside stations.

As shown in FIG. 2, the power supply 160 may provide power to various components of the vehicle 100. In an embodiment, the power supply 160 may be a rechargeable lithium-ion or lead-acid battery. One or more battery packs of such batteries may be configured as the power supply to supply power to the components of the vehicle 100. In some embodiments, the power supply 160 and the energy source 113 may be implemented together, as in some battery electric vehicles.

For example, some or all of the functions of the vehicle 100 may be controlled by the computer system 150, where the computer system 150 may include at least one processor 151, and the processor 151 executes an instruction 153 stored in, for example, a non-transient computer-readable medium in a memory 152. The computer system 150 may alternatively be a plurality of computing devices that control individual components or subsystems of the vehicle 100 in a distributed manner.

For example, the processor 151 may be any conventional processor, such as a commercially available central processing unit (central processing unit, CPU).

Optionally, the processor may be a dedicated device, for example, an application-specific integrated circuit (application specific integrated circuit, ASIC) or another hardware-based processor. Although FIG. 2 functionally illustrates the processor, the memory, and other elements of a computer in a same block, a person of ordinary skill in the art should understand that the processor, the computer, or the memory may actually include a plurality of processors, computers, or memories that may or may not be stored in a same physical housing. For example, the memory may be a hard disk drive or another storage medium located in a housing different from that of the computer. Thus, it is understood that a reference to the processor or the computer includes a reference to a set of processors or computers or memories that may or may not operate in parallel. Different from using a single processor to perform the steps described herein, some components such as a steering component and a deceleration component may each include a respective processor. The processor performs only computation related to component-specific functions.

In various aspects described herein, the processor may be located remote from the vehicle and wirelessly communicate with the vehicle. In other aspects, some of the processes described herein are performed on the processor disposed inside the vehicle, while others are performed by a remote processor. The processes include a necessary step of performing a single operation.

In some embodiments, the memory 152 may include the instruction 153 (for example, program logic), and the instruction 153 may be executed by the processor 151 to perform various functions of the vehicle 100, including those functions described above. The memory 152 may also include additional instructions, including instructions to send data to, receive data from, interact with, and/or control one or more of the travel system 110, the sensing system 120, the control system 130, and the peripheral device 140.

For example, in addition to the instruction 153, the memory 152 may also store data, such as road maps, route information, locations, directions, and speeds of the vehicle and other such vehicle data, as well as other information. Such information may be used by the vehicle 100 and the computer system 150 during operation of the vehicle 100 in autonomous, semi-autonomous, and/or manual modes.

As shown in FIG. 2, the user interface 170 may be configured to provide information to or receive information from the user of the vehicle 100. Optionally, the user interface 170 may be included in one or more input/output devices in a set of the peripheral device 140, for example, the wireless communications system 141, the vehicle-mounted computer 142, the microphone 143, and the speaker 144.

In this embodiment of this application, the computer system 150 may control the functions of the vehicle 100 based on inputs received from various subsystems (for example, the travel system 110, the sensing system 120, and the control system 130) and the user interface 170. For example, the computer system 150 may use an input from the control system 130 to control the brake unit 133 to avoid an obstacle that is detected by the sensing system 120 and the obstacle avoidance system 136. In some embodiments, the computer system 150 is operated to provide control over many aspects of the vehicle 100 and the subsystems of vehicle.

Optionally, one or more of the foregoing components may be installed separately from or associated with the vehicle 100. For example, the memory 152 may exist partially or completely separate from the vehicle 100. The foregoing components may be communicatively coupled together in a wired and/or wireless manner.

Optionally, the foregoing components are merely examples. In actual application, components in the foregoing modules may be added or removed based on actual requirements. FIG. 2 should not be understood as a limitation to this embodiment of this application.

Optionally, the vehicle 100 may be an autonomous driving vehicle traveling on a road and may identify an object in the surrounding environment of the vehicle, to determine to adjust a current speed. The object may be another vehicle, a traffic control device, or another type of object. In some examples, each identified object may be considered independently and may be used to determine, based on features of the object, such as a current speed of the object, an acceleration of the object, and a spacing between the object and the vehicle, a speed to be adjusted for the autonomous driving vehicle.

Optionally, the vehicle 100 or a computing device (for example, the computer system 150, the computer vision system 134, or the memory 152 shown in FIG. 2) associated with the vehicle 100 may be configured to predict behavior of the identified object based on the features of the identified object and a state (for example, traffic, rain, or ice on a road) of the surrounding environment.

Optionally, the recognized objects depend on behavior of each other. Therefore, all the recognized objects may be considered together to predict behavior of a single recognized object. The vehicle 100 can adjust its speed based on the predicted behavior of the recognized object. In other words, the autonomous driving vehicle can determine, based on the predicted behavior of the object, that the vehicle needs to be adjusted (for example, acceleration, deceleration, or stop) to a stable state. In this process, another factor may also be considered to determine the speed of the vehicle 100, for example, a horizontal position of the vehicle 100 on a road on which the vehicle travels, a curvature of the road, and proximity between a static object and a dynamic object.

In addition to providing an instruction for adjusting the speed of the autonomous driving vehicle, the computing device may further provide an instruction for modifying a steering angle of the vehicle 100, so that the autonomous driving vehicle can follow a given track and/or maintain safe horizontal and vertical distances from an object (for example, a car on a neighboring lane of the road) near the autonomous driving vehicle.

The vehicle 100 may be a car, a truck, a motorcycle, a bus, a boat, an airplane, a helicopter, a lawn mower, a recreational vehicle, a playground vehicle, a construction device, a trolley bus, a golf cart, a train, a handcart, or the like. This is not specifically limited in this embodiment of this application.

In the foregoing application scenarios, an image of a road on which the vehicle is located may be obtained by using the sensing system 120, and the image includes imaging of the road. Specifically, the image of the road on which the vehicle is located may be obtained by using the camera 125. The sensing system 120 sends the obtained image to the control system 130, so that the control system 130 may perform processing such as lane line detection and tracking on the image. Specifically, the foregoing process may be performed by using the computer vision system 134, to obtain a lane line tracking result.

For example, the lane line tracking result may then be transmitted to the route control system 135, the route control system 135 generates corresponding instructions, and the corresponding instructions are executed by the steering system 131, the throttle 132, the brake unit 133, and the like in the travel system 110 or the control system 130, to control subsequent behavior of the vehicle. For another example, the tracking result may be further transmitted to another module of the control system 130, for example, any one or more modules (not shown in the figure) such as the path planning module, the driving planning module, the navigation control module, or the warning policy planning module. In this way, the foregoing modules can implement corresponding functions based on the lane line tracking result and with reference to other information, for example, generating a planned path, determining a freespace, generating a navigation instruction, or generating a warning signal.

In a possible implementation, the vehicle 100 shown in FIG. 2 may be an autonomous driving vehicle. The following describes an autonomous driving system in detail.

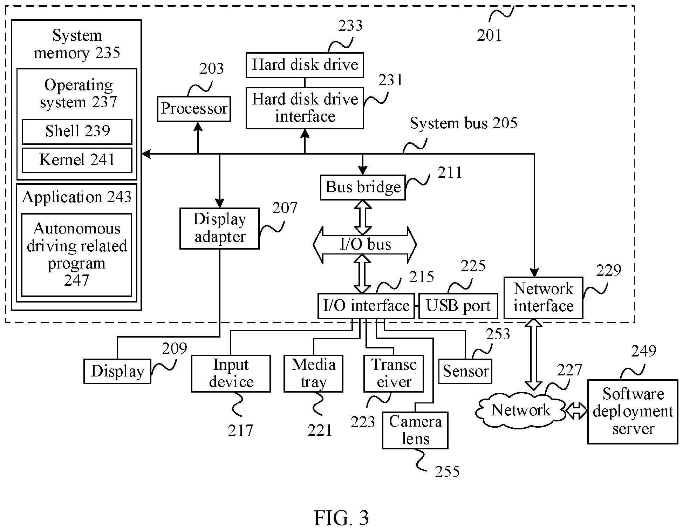

FIG. 3 is a schematic diagram of an autonomous driving system according to an embodiment of this application.

The autonomous driving system shown in FIG. 3 includes a computer system 201. The computer system 201 includes a processor 203, and the processor 203 is coupled to a system bus 205. The processor 203 may be one or more processors, and each processor may include one or more processor cores. A display adapter (video adapter) 207 may drive a display 209, and the display 209 is coupled to the system bus 205. The system bus 205 may be coupled to an input/output (I/O) bus 213 by using a bus bridge 211, and an I/O interface 215 is coupled to the I/O bus. The I/O interface 215 communicates with a plurality of I/O devices, such as an input device 217 (for example, a keyboard, a mouse, or a touchscreen) and a media tray (media tray) 221 (for example, a CD-ROM or a multimedia interface). A transceiver 223 may transmit and/or receive radio communications signals, and a camera lens 255 may capture static and dynamic digital video images. An interface connected to the I/O interface 215 may be a USB port 225.

The processor 203 may be any conventional processor, for example, a reduced instruction set computing (reduced instruction set computer, RISC) processor, a complex instruction set computing (complex instruction set computer, CISC) processor, or a combination thereof.

Optionally, the processor 203 may be a dedicated apparatus, for example, an application-specific integrated circuit (ASIC). The processor 203 may be a neural network processor or a combination of the neural network processor and the foregoing conventional processor.

Optionally, in various embodiments described in this specification, the computer system 201 may be located far away from an autonomous driving vehicle, and can wirelessly communicate with the autonomous driving vehicle. In other aspects, some of the processes described in this application are performed on a processor disposed inside the autonomous driving vehicle, and others are performed by a remote processor, including taking actions required to perform a single operation.

The computer system 201 may communicate with a software deployment server 249 through a network interface 229. The network interface 229 is a hardware network interface, for example, a network interface card. A network 227 may be an external network, for example, the internet, or may be an internal network, for example, an Ethernet or a virtual private network (virtual private network, VPN). Optionally, the network 227 may alternatively be a wireless network, for example, a Wi-Fi network or a cellular network.

As shown in FIG. 3, a hard disk drive interface is coupled to the system bus 205, a hardware driver interface 231 may be connected to a hard disk drive 233, and a system memory 235 is coupled to the system bus 205. Data running in the system memory 235 may include an operating system 237 and an application 243. The operating system 237 may include a shell (shell) 239 and a kernel (kernel) 241. The shell 239 is an interface between a user and the kernel (kernel) of the operating system. The shell may be the outermost layer of the operating system. The shell can manage interactions between the user and the operating system, such as waiting for a user input, interpreting the user input to the operating system, and processing a variety of output results of operating system. The kernel 241 may include components in the operating system that are configured to manage a memory, a file, a peripheral device, and a system resource. The kernel directly interacts with hardware. The kernel of the operating system usually runs processes, provides communication between the processes, and provides CPU time slice management, interruption, memory management, I/O management, and the like. The application 243 includes programs for controlling autonomous driving of the vehicle, for example, a program that manages interaction between the autonomous driving vehicle and a road obstacle, a program that controls a route or a speed of the autonomous driving vehicle, a program that controls interaction between the autonomous driving vehicle and another autonomous driving vehicle on a road. The application 243 also exists on a system of the software deployment server 249. In an embodiment, the computer system 201 may download the application from the software deployment server 249 when an autonomous driving related program 247 needs to be executed.

For example, the application 243 may alternatively be a program for the autonomous driving vehicle to interact with a lane line on the road, in other words, the application is a program that can track the lane line in real time.

For example, the application 243 may alternatively be a program that controls the autonomous driving vehicle to perform automatic parking.

For example, a sensor 253 may be associated with the computer system 201, and the sensor 253 may be configured to detect a surrounding environment of the computer 201.

For example, the sensor 253 may detect a lane on the road, for example, may detect a lane line, and can track, in real time, a lane line change in a specific range in front of the vehicle in a process of moving (for example, being driven). For another example, the sensor 253 may detect an animal, an automobile, an obstacle, a pedestrian crosswalk, and the like. Further, the sensor may detect surrounding environments of the foregoing objects such as the animal, the automobile, the obstacle, and the pedestrian crosswalk. For example, the sensor may detect the surrounding environment of the animal such as another animal that appears around the animal, a weather condition, and brightness of the surrounding environment.

Optionally, if the computer 201 is located on the autonomous driving vehicle, the sensor may be a camera lens, an infrared sensor, a chemical detector, a microphone, or the like.

For example, in a lane line tracking scenario, the sensor 253 may be configured to detect a lane line in front of the vehicle, so that the vehicle can sense a lane change in a traveling process, to perform real-time planning and adjustment on driving of the vehicle based on the lane change.

For example, in an automatic parking scenario, the sensor 253 may be configured to detect sizes or locations of a packing place around the vehicle and a surrounding obstacle, so that the vehicle can sense a distance between the packing place and the surrounding obstacle, and perform collision detection during parking, to prevent the vehicle from colliding with the obstacle.

In an example, the computer system 150 shown in FIG. 2 may also receive information from or transfer information to another computer system. Alternatively, the sensor data collected from the sensing system 120 of the vehicle 100 may be transferred to another computer to process the data.

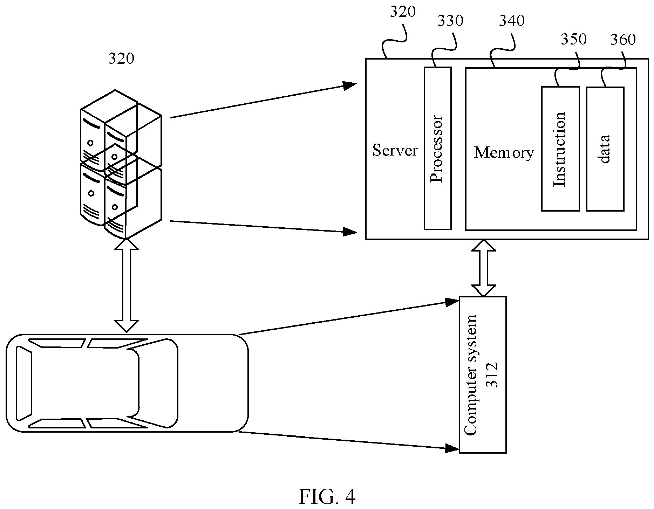

The following uses FIG. 4 as an example for description. FIG. 4 is a schematic diagram of application of a cloud-side instruction autonomous driving vehicle according to an embodiment of this application.

As shown in FIG. 4, data from a computer system 312 may be transferred via a network to a cloud-side server 320 for further processing. The network and an intermediate node may include various configurations and protocols, including the Internet, the World Wide Web, an intranet, a virtual private network, a wide area network, a local area network, a private network that uses proprietary communication protocols of one or more companies, Ethernet, Wi-Fi, HTTP, and various combinations thereof. Through such communication, data may be transferred to another computer and transferred from the another computer to any device such as a modem and a wireless interface.

In an example, the server 320 may include a server such as a load balancing server cluster having a plurality of computers, and exchanges information with different nodes of the network for the purpose of receiving, processing, and transmitting data from the computer system 312. The server may be configured similar to the computer system 312, and has a processor 330, a memory 340, instructions 350, and data 360.

For example, the data 360 of the server 320 may include information related to road conditions around the vehicle. For example, the server 320 may receive, detect, store, update, and transmit the information related to the road conditions of the vehicle.

For example, the information related to the road conditions around the vehicle includes information about other vehicles and information about obstacles around the vehicle.

Current lane line detection and lane line tracking usually need to use a plane assumption principle, for example, an autonomous driving vehicle is in a flat area and there is no ramp. Further, a lane line in an image coordinate system is corresponded to a lane line in an autonomous driving vehicle coordinate system of the autonomous driving vehicle, to complete spatial positioning of a lane. However, a plane assumption means that it is assumed that a road surface on which the vehicle is located is completely flat and no ramp exists, which is usually difficult to implement in a real world. Therefore, lane positioning accuracy is relatively low. In addition, a road surface condition changes in real time in a traveling process of the vehicle. Therefore, the foregoing method cannot adapt to a constantly changing road surface condition.

In addition, the current lane line detection and lane line tracking further usually need to assume that lane lines on a road surface are parallel to each other. However, a quantity of lane lines often changes near an intersection, for example, one or more lane lines are added at an intersection. As a result, the premise that the lane lines are parallel to each other is not met, and a lane cannot be accurately positioned.

According to analysis, in a solution of the conventional technology, lane line tracking is performed based on a plane assumption, which also means that a mapping relationship between a vehicle coordinate system and an image coordinate system is unchanged by default. In other words, the vehicle coordinate system and the image coordinate system are always parallel by default. Therefore, when a prediction value, of a lane line model, obtained in the vehicle coordinate system is matched with a detected lane line in the image coordinate system by using the fixed mapping relationship, a large deviation occurs, but the deviation is ignored in the solution of the conventional technology. As a result, a lane line tracking result has a relatively large error. However, in the solution of the embodiments of this application, the deviation can be obtained and eliminated, thereby improving accuracy of lane line tracking. In the embodiments of this application, a lane line tracking method and a lane line tracking apparatus are provided. A mapping relationship between an image coordinate system and a vehicle coordinate system is obtained in real time, to eliminate impact of road unevenness. In other words, by using such a real-time mapping relationship, a change in the mapping relationship between the image coordinate system and the vehicle coordinate system can be captured, and a more accurate mapping relationship can be obtained, thereby eliminating the impact of road unevenness. In the embodiments of this application, a homography matrix is further used to represent the mapping relationship between the image coordinate system and the vehicle coordinate system, and a real-time homography matrix is used to represent the real-time mapping relationship. In addition, a lane line tracking result is determined by combining lane line detection information obtained in the image coordinate system and the prediction value of the lane line model in the vehicle coordinate system, to eliminate the impact of road unevenness on lane line tracking and improve the accuracy of lane line tracking. In addition, because each lane line is separately tracked in the solution of this embodiment of this application, it does not need to assume that lane lines are parallel. Therefore, the solution can be applied to any urban road scenario, and the accuracy of lane line tracking is also improved, and the solution is universal, and is applicable to all urban roads.

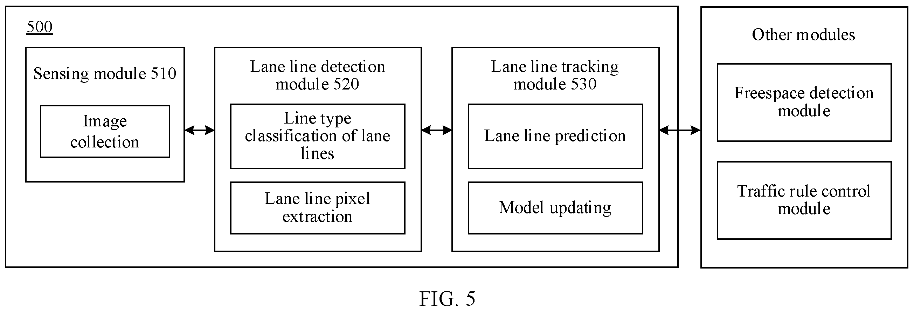

FIG. 5 is a schematic diagram of a lane line detection and tracking apparatus according to an embodiment of this application. The apparatus 500 may be configured to perform a lane line detection process and/or configured to perform a lane line tracking process. As shown in FIG. 5, the apparatus 500 may include a sensing module 510, a lane line detection module 520, and a lane line tracking module 530.

The sensing module 510 may be configured to sense information about a road surface and information about a surrounding environment when a vehicle travels. The sensing module may include a camera, and the camera may be configured to capture an image, that is, may be configured to sense the information about the surrounding environment of the vehicle. For example, the camera may be configured to obtain images within 100 meters (meter, m) in front of the vehicle.

The lane line detection module 520 may be configured to implement lane line detection in a pixel coordinate system (an image coordinate system). The module may include a deep learning network, and is configured to obtain a line type of a lane line and a pixel of the lane line. For example, the lane line detection module 520 may receive an image from the sensing module 510, perform processing such as feature extraction on the image to obtain feature information of the lane line, and further perform classification and pixel extraction based on the feature information of the lane line, to obtain the line type of the lane line and the pixel of the lane line.

It should be noted that the line type may be understood as a type of the lane line, for example, a common line type such as a solid line, a dashed line, or a double line on an urban road. However, it should be understood that the foregoing several examples are merely examples of several provided line types, and are not limited. In addition to the foregoing types, other line types may be used, to be specific, any lane line type that exists on the road or a lane line type that may be newly generated in the future according to a policy change or the like may be used as an example of the line type of the lane line in this application. The pixel of the lane line may be understood as coordinates of the lane line in the pixel coordinate system, or may be understood as a relative location of the lane line in the image.

The lane line tracking module 530 may be configured to obtain the line type and the pixel, of the lane line, from the lane line detection module 510, and may be further configured to obtain autonomous driving vehicle information from another module. The information about the autonomous driving vehicle may be understood as information used to describe a status, a motion, and the like of the vehicle. The information about the autonomous driving vehicle may include motion information of the autonomous driving vehicle, and the motion information of the autonomous driving vehicle may be understood as dynamics information, for example, may include any one or more pieces of dynamics information such as a vehicle speed or an angular speed of the vehicle. The lane line tracking module 530 may predict the lane line and/or update a lane line model based on one or more of the foregoing line type of the lane line, the pixel of the lane line, the information about the autonomous driving vehicle, and the like.

Optionally, the lane line tracking module 530 may be configured to obtain a lane line prediction value at the next moment based on the information about the autonomous driving vehicle at the current moment by using a lane line prediction method (for example, the IMM algorithm described below). At the next moment, a homography matrix is calculated by using the lane line prediction value at the next moment and a lane line pixel obtained at the next moment. After the homography matrix is obtained, the lane line prediction value at the next moment is transferred to an image by using the homography matrix, and a lane line tracking result is determined based on the lane line pixel obtained at the next moment and the lane line prediction value. The lane line tracking result may be a final lane line prediction value (for example, the second prediction value described below) determined by using the lane line prediction value.

The lane line tracking result output by the lane line tracking module 530 may be further transferred to another module, for example, may be transferred to a freespace detection module, to obtain a more accurate freespace. For another example, the lane line tracking result may be transferred to a traffic rule control module, to control the vehicle not to violate a traffic rule, or the like. For another example, the lane line tracking result may be applied to the foregoing application scenarios, and the applications of the lane line tracking result are not enumerated herein one by one.

It should be noted that the modules shown in FIG. 5 are merely logically divided, and a division manner is not limited, and another division manner may alternatively be used. For example, the lane line detection module 520 may be used as a part of the lane line tracking module 530, which is equivalent to disposing an obtaining module in the lane line tracking module 530 to obtain the line type and the pixel of the lane line. For another example, the sensing module 510 may be used as a module independent of the apparatus 500, that is, the apparatus 500 only needs to be capable of obtaining a to-be-processed image, and does not need to photograph an image in real time. For another example, both the sensing module 510 and the lane detection module 520 may be used as modules independent of the apparatus 500, that is, the lane detection module 530 only needs to be capable of obtaining detection information (for example, the line type and the pixel) of the lane line. For another example, both the sensing module 510 and the lane detection module 520 may be integrated into the lane line tracking module 530, or the sensing module 510 and the lane detection module 520 may be set as obtaining modules of the lane line tracking module 530.

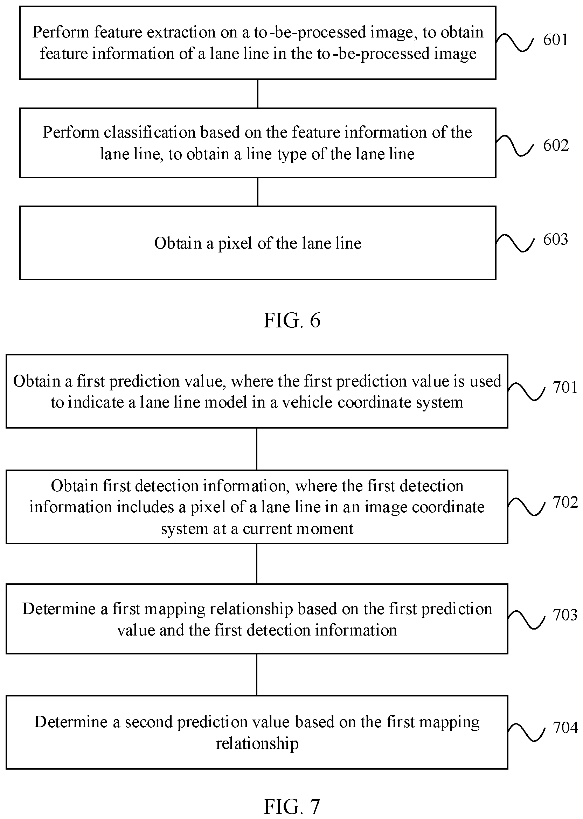

FIG. 6 is a schematic flowchart of a lane line detection method according to an embodiment of this application. The detection method shown in FIG. 6 may be performed by the vehicle shown in FIG. 2, the autonomous driving system shown in FIG. 3, or the detection system shown in FIG. 5. For example, the detection method may be performed by the lane line detection module 520 in FIG. 5. For another example, an obtaining module may be disposed in the lane line tracking module 530, and the detection method is performed by the obtaining module. The following describes steps of the method shown in FIG. 6.

601: Perform feature extraction on a to-be-processed image, to obtain feature information of a lane line in the to-be-processed image.

Optionally, the to-be-processed image may be obtained by using a camera, a camera lens, or the like, may be obtained in real time, or may be read from a storage module, a storage apparatus, or a storage device.

It should be noted that the feature information of the lane line is information that can indicate a feature of the lane line.

Optionally, the feature information may be obtained by using a neural network-based method, or the feature information may be obtained by using another method.

602: Perform classification based on the feature information of the lane line, to obtain a line type of the lane line.

Optionally, lane lines may be classified by using the neural network-based method, to determine line types of the lane lines. The line type refers to a type of a lane line that may exist on a road. For example, in urban traffic, lane lines include the types such as a solid line, a dashed line, and a double line. However, it should be noted that, in this embodiment of this application, whether the lane line is a straight line or a curve is not distinguished, because all lane lines may be represented by using curves, and the straight line may be considered as a special case of the curves.

603: Obtain a pixel of the lane line.

Optionally, the pixel of the lane line in the image may be obtained by using a regression method or by using an instance segmentation method. The regression method is equivalent to performing point-by-point extraction on the lane line in the image. In other words, points that can represent the lane line can be obtained. Instance segmentation may be understood as identifying an object contour at a pixel level, which is equivalent to segmenting the lane line in the image in a form of a bar box. In other words, some bar boxes that can represent lane lines may be obtained by using the instance segmentation method.

It should be understood that the pixel may be interpreted as used to indicate a relative location or coordinates of the lane line in the image. It should be further understood that, in addition to the foregoing two common methods for obtaining the pixel of the lane line, another method with a same function or a similar function may be used to obtain the pixel of the lane line. This is not limited in this application.

In this embodiment of this application, detection information, of the lane line, in a pixel coordinate system (an image coordinate system) may be obtained by using the lane line detection method shown in FIG. 6, for example, information such as the line type and the pixel of the lane line. The detection information may be used as input data of a lane line tracking method. In other words, the detection information of the lane line may be understood as the information, about the lane line, that is in the image coordinate system and that is obtained by using the lane line detection method, and the detection information may include at least one of the line type or the pixel.

FIG. 7 is a schematic flowchart of a lane line tracking method according to an embodiment of this application. The following describes the lane line tracking method with reference to the steps shown in FIG. 7.

701: Obtain a first prediction value, where the first prediction value is used to indicate a lane line model in a vehicle coordinate system.

Optionally, the first prediction value may be a lane line prediction value that corresponds to a current moment and that is obtained in the vehicle coordinate system based on information about an autonomous driving vehicle (for example, motion information of the autonomous driving vehicle) at a prior moment.

The information about the autonomous driving vehicle may be understood as information used to describe a status, a motion, and the like of the vehicle. The information about the autonomous driving vehicle may include motion information of the autonomous driving vehicle, and the motion information of the autonomous driving vehicle may be understood as dynamics information, for example, may include any one or more pieces of dynamics information such as a vehicle speed or an angular speed (for example, a yaw angular speed) of the vehicle.

Optionally, the information about the autonomous driving vehicle may be obtained in real time or read from a storage apparatus by using the foregoing related apparatus or modules.

It should be further understood that the first prediction value may be read from, for example, the storage apparatus, or may be obtained by performing an operation by using the motion information of the autonomous driving vehicle, and the like. The first prediction value may be generated at the prior moment, or may be generated at the current moment, to be specific, after information such as the motion information of the autonomous driving vehicle at the prior moment is obtained before the current moment, prediction is performed to obtain the first prediction value; alternatively, only the motion information of the autonomous driving vehicle is stored at the prior moment, no operation is performed, and an operation is performed at the current moment, and the like, which are not enumerated herein one by one.

The first prediction value may be obtained by using the following method.

It should be noted that the lane line model may be understood as a mathematical model of the lane line, or may be understood as an expression indicating the lane line. For example, the foregoing curve equation may be used to indicate the lane line. For another example, a polynomial may be used to indicate the lane line. Therefore, the lane line model may also be referred to as a lane line equation, a lane line curve equation, a lane line polynomial, or the like.

Optionally, the lane line model may be indicated by using parameters such as a location (intercept), an angular degree, a curvature, a change rate of the curvature, and a curvature radius of the lane line.

Optionally, the lane line model may further be indicated by using parameters such as a lane width, a location at which a vehicle center deviates from a lane center, a lane line angular degree, and a curvature. It should be understood that there may be another manner of indicating the lane line, provided that a relative location and a change trend of the lane line can be indicated, and there is no limitation.

Optionally, a lane line prediction method or referred to as a lane line prediction algorithm may be used to obtain a prediction value, namely, the first prediction value, of the lane line in the vehicle coordinate system at the current moment based on a time interval between the current moment and the prior moment and the information about the autonomous driving vehicle at the prior moment.

Optionally, the lane line prediction method may obtain the prediction value of the lane line by using, for example, an IMM algorithm or referred to as an IMM prediction method.

It should be noted that, the lane line prediction algorithm may also be considered as processing some input data by using a model of the lane line prediction algorithm, to obtain a prediction value of the lane line model. For example, a model of the IMM algorithm may be referred to as an IMM prediction model, an IMM algorithm model, or the like. It can be learned that, in this embodiment of this application, the model of the lane line prediction algorithm and the lane line model are different concepts, and the model of the lane line prediction algorithm is a model of a prediction algorithm used to obtain the prediction value of the lane line model. The lane line model is a curve equation, which is alternatively referred to as a mathematical expression, of the lane line in the vehicle coordinate system.

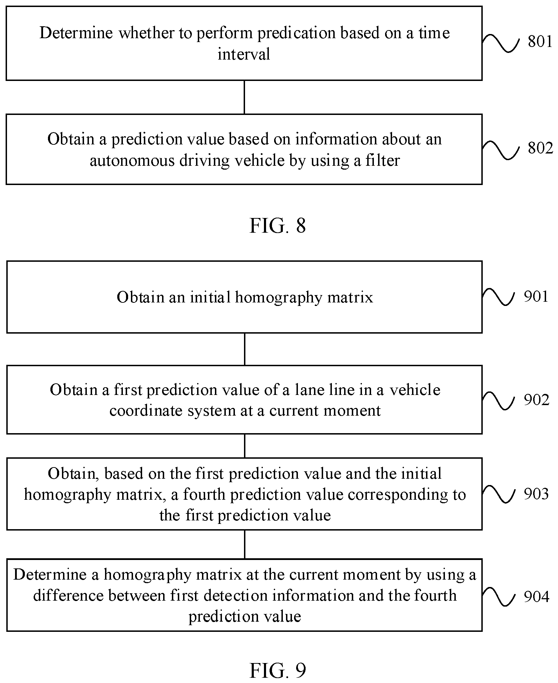

FIG. 8 is a schematic flowchart of predicting a lane line by using IMM according to an embodiment of this application. With reference to FIG. 8, the IMM algorithm is used as an example to describe how to obtain the prediction value of the lane line in the vehicle coordinate system at the current moment by using the lane line prediction method provided in this embodiment of this application.

Optionally, an EKF filter may be used to perform filtering processing on the lane line model in the vehicle coordinate system, to improve the accuracy of the lane line model.

801: Determine whether to perform prediction based on a time interval.

Optionally, whether prediction needs to be performed is determined based on a time interval determined by timestamps of an input image, to be specific, whether a state value of the filter needs to be changed is determined based on a time interval determined by moments corresponding to a prior frame of image and a latter frame of image of the input image, to obtain a lane line prediction value. The state value of the filter may also be understood as a coefficient of the filter, or a state, a parameter, or the like of the filter.

The timestamps may be understood as moments corresponding to the foregoing image frames.

Optionally, it may be set that when the time interval determined by the two frames of images satisfies the following formula, the filter is set to an updateable mode or referred to as an operating mode, which may be referred to as starting the filter.

$$\text{MinLoopTime} \leq \Delta T \leq \text{MaxLoopTime} \ (2)$$

In the formula, $\Delta T = T(t) - T(t-1)$ represents the time interval determined by the prior frame of image and the latter frame of image, and a unit may be represented by millisecond (millisecond, ms). $T(t)$ and $T(t-1)$ may respectively represent a timestamp corresponding to an earlier moment and a timestamp corresponding to a later moment in the input image. MaxLoopTime represents a maximum time interval threshold, for example, may be set to 200 milliseconds (millisecond, ms). MinLoopTime represents a minimum time interval threshold, for example, 10 ms. When $\Delta T$ satisfies the foregoing formula (2), the filter may be set to the updateable mode or referred to as an operating mode, which may be referred to as starting the filter.

It should be noted that, assuming that a moment with a later timestamp in the two frames of images is used as the current moment, a moment with an earlier timestamp may be used as the prior moment. Alternatively, the moment with the later timestamp may be used as a latter moment, and the moment with the earlier timestamp may be used as the current moment. That is, the two frames of images may or may not be consecutive. When the two frames of images are consecutive, it may be considered that the two frames of images are an image at a previous moment and an image at the current moment respectively, or it may be considered that the two frames of images are an image at the current moment and an image at the next moment respectively.

It should be further noted that, in step 901, whether to perform prediction is determined by determining whether the time interval between the prior moment (for example, the T(t-1)) and the current moment (for example, the T(t)) falls within a preset range. The reason is that when the time interval is excessively large, the vehicle may actually have traveled a relatively long distance, the lane line may have changed greatly, and the vehicle may not be driven on a same road. In this case, such prediction may cause a large error and the like. However, when the time interval is excessively small, the vehicle may actually hardly move forward. In this case, although such prediction is still accurate, because a change is small and a parameter may be almost unchanged, such excessively frequent prediction leads to a waste of resources to some extent. Therefore, prediction is performed only when the time interval falls within the preset range, so that occupied resources can be reduced while a relatively accurate lane line prediction value is obtained.

It should be further understood that the preset range is not limited to a value or the like. For example, an upper limit (MaxLoopTime) of the preset range may be set to another value different from 200 ms in the foregoing example according to a method such as experience or experiment. A lower limit (MinLoopTime) of the preset range may also be set to another value different from 10 ms in the foregoing example according to a method such as experience or experiment. Details are not described herein again.

802: Obtain a prediction value based on the information about the autonomous driving vehicle by using the filter.

Optionally, a lane line prediction value at the current moment may be obtained by using the information about the autonomous driving vehicle at the prior moment, the filter at the prior moment, and the time interval between the prior moment and the current moment.

Optionally, the information about the autonomous driving vehicle at the prior moment (for example, a previous moment) and a state of the filter at the prior moment (for example, the previous moment) may be used to calculate an estimation of the filter at the current moment, to obtain the lane line prediction value at the current moment.

Optionally, a tracker (filter) in the lane line tracking method may be represented by using a state space. The state space of the tracker includes at least one of the following parameters: a curvature change of the lane line model (lane line curve equation), a curvature of the lane line, a slope of a tangent of the lane line at an origin of the vehicle coordinate system, or an offset of the lane line at the origin of the vehicle coordinate system. For example, assuming that four lane lines, namely, a left left lane line, a left lane line, a right lane line, and a right right lane line, need to be tracked, the state space X of the tracker may be constructed by using the following formula, where X is a 9-dimensional vector.

$$X = [curvature_{change}, curvature, slope, offset_{leftneighbor}, offset_{left}, offset_{right},$$
$$offset_{rightneighbor}, pitch, yaw]^{T} \in \mathrm{R}^{9} \tag{3}$$

In the formula, $curvature_{change}$ represents the curvature change of the lane line model, $curvature$ represents the curvature of the lane line, $slope$ represents the slope of the tangent of the lane line at the origin of the vehicle coordinate system, $offset_{leftneighbor}, offset_{left}, offset_{right}, offset_{rightneighbor}$ respectively represent an offset of the left left lane line at the origin of the vehicle coordinate system, an offset of the left lane line at the origin of the vehicle coordinate system, an offset of the right lane line at the origin of the vehicle coordinate system, and an offset of the right right lane line at the origin of the vehicle coordinate system, $pitch$ represents a pitch angle, and $yaw$ represents a yaw angle.

Optionally, the state of the tracker (filter) may be updated by using the following formulas.

$$\hat{X}(t \mid t-1) = F * X(t-1 \mid t-1) + g, \tag{4}$$

$$F = \begin{bmatrix} 1 & 0 & 0 & 0 & 0 & 0 & 0 & 0 & 0 \\ l & 1 & 0 & 0 & 0 & 0 & 0 & 0 & 0 \\ -\dfrac{1}{2}l^2 & -l & 1 & 0 & 0 & 0 & 0 & 0 & 0 \\ \dfrac{1}{6}l^3 & \dfrac{1}{2}l^2 & -l & 1 & 0 & 0 & 0 & 0 & -l \\ \dfrac{1}{6}l^3 & \dfrac{1}{2}l^2 & -l & 0 & 1 & 0 & 0 & 0 & -l \\ \dfrac{1}{6}l^3 & \dfrac{1}{2}l^2 & -l & 0 & 0 & 1 & 0 & 0 & -l \\ \dfrac{1}{6}l^3 & \dfrac{1}{2}l^2 & -l & 0 & 0 & 0 & 1 & 0 & -l \\ 0 & 0 & 0 & 0 & 0 & 0 & 0 & 1 & 0 \\ 0 & 0 & 0 & 0 & 0 & 0 & 0 & 0 & 1 \end{bmatrix} \in \mathbf{R}^{9\times9}, \qquad (5)$$

$$g = [0, 0, phi_{ego}*dt, -\frac{1}{2}*l*phi_{ego}, -\frac{1}{2}*l*phi_{ego} -\frac{1}{2}*l*phi_{ego} -\frac{1}{2}*l*phi_{ego}, 0, 0]^{\mathrm{T}} \in \mathbf{R}^{9}, \quad (6)$$

It is assumed that the current moment is t, and t-1 is used to represent a previous moment or is referred to as a previous moment. In the foregoing formulas, $X(t$-1$|t$-1$)$ represents a state vector/matrix formed by a state of the filter at a moment t-1, or may be referred to as a state vector/matrix formed by a coefficient of the filter; $\hat{X}(t|t$-1$)$ represents a state estimation at a moment t obtained based on the state of the filter at the moment t-1; $dt = \Delta T$ represents a time interval between the moment t and the moment t-1; $l$ represents a distance interval between the moment t and the moment t-1, and may be obtained by using a formula $l = dt\,{}^*v_{ego}$; $v_{ego}$ represents a traveling speed of the vehicle, or referred to as a vehicle speed; $phi_{ego}$ represents an angular speed of the vehicle, such as a yaw angular speed; F represents a state transition matrix; and g may be understood as a gain of the state, and is equivalent to a change value of the state at the moment t relative to the moment t-1.

The following formulas may be used to update a covariance matrix of the tracker.

$$\hat{P}(t\,|\,t-1) = F*P(t-1\,|\,t-1)*F^{\mathrm{T}} + Q, \qquad (7)$$

$$Q = q_1*q_2, \qquad (8)$$

In the formulas, $\hat{P}(t|t$-1$)$ represents an estimation of the covariance matrix at the moment t obtained based on a value of the covariance matrix at the moment t-1; $P(t$-1$|t$-1$)$ represents the covariance matrix at the moment t-1; and Q represents a covariance matrix of system noise, and q represents a noise matrix/vector of a system in the above formula (8). That is, the noise matrix/vector of the system is used to construct a noise covariance matrix.

If $Q_{ij}$ is used to represent an element in the $i^{th}$ row and the $j^{th}$ column in Q, qil is used to represent the $i^{th}$ element in $q_1$, and $q_{2j}$ is used to represent the $j^{th}$ element in $q_2$, $Q_{ij}=q_{i1}{}^*q_{2j}$, where both i and j are integers. With reference to the foregoing formulas (4) to (6), it may be set that Q is a matrix with 9 rows and 9 columns, $q_1$ is a 9*1 column vector, and $q_2$ is a 1*9 row vector.

Optionally, elements corresponding to $q_1$ and $q_2$ may be initially set to be equal, which in other words is equivalent to that $q_1=q_2{}^{\mathrm{T}}$.

It can be learned, by combining the formulas (4) to (8), that step 902 of updating the state of the filter at the current moment is mainly performed based on the time interval (for example, the foregoing $\Delta T$) between the prior moment (for example, the foregoing moment t-1) and the current moment (for example, the foregoing moment t), and the information (for example, the foregoing vehicle speed and the foregoing angular speed) about the autonomous driving vehicle at the prior moment, to obtain the lane line prediction value at the current moment.

It should be noted that, in the method shown in FIG. 8, step 801 may not be performed, and when step 801 is performed, a better prediction result can be obtained. The reason is that when the time interval is excessively large, the vehicle may actually have traveled a relatively long distance, the lane line may have changed greatly, and the vehicle may not be driven on a same road. In this case, such prediction may cause a large error and the like. However, when the time interval is excessively small, the vehicle may actually hardly move forward. In this case, although such prediction is still accurate, because a change is small and a parameter may be almost unchanged, excessively frequent prediction operations lead to a waste of resources to some extent. Therefore, the method shown in FIG. 8 can reduce occupied resources while obtaining a relatively accurate lane line prediction value.

702: Obtain first detection information, where the first detection information includes a pixel of the lane line in an image coordinate system at the current moment.

Optionally, detection information of the lane line may include pixel information of the lane line, and may further include a line type of the lane line. For example, the first detection information may include the pixel of the lane line in the image coordinate system at the current moment, or may include a line type of the lane line at the current moment.

It should be noted that the current moment is determined by using a moment corresponding to an image frame. For example, it is assumed that a moment corresponding to a frame of image is used as the current moment. In this case, the prior moment refers to a moment that corresponds to a frame of image in image frames and that is earlier than the current moment, and the prior moment may include a previous moment; and a latter moment refers to a moment that corresponds to a frame of image in the image frames and that is later than the current moment, and the latter moment may include a next moment.

Optionally, the detection information may be obtained in real time by using the related apparatus provided above and using the method shown in FIG. 6, or the detection information may be obtained from the storage apparatus.

It should be understood that step 701 and step 702 may be performed at the same time or may not be performed at the same time, and a performing sequence is not limited. In addition, obtaining manners may be the same or different.

703: Determine a first mapping relationship based on the first prediction value and the first detection information.

It should be noted that the first mapping relationship is used to indicate a real-time mapping relationship between the image coordinate system and the vehicle coordinate system. For the current moment, the first mapping relationship is a mapping relationship at the current moment between the image coordinate system and the vehicle coordinate system.

Optionally, the first prediction value may be a lane line prediction value that corresponds to the current moment and that is obtained in the vehicle coordinate system based on the information about the autonomous driving vehicle (for example, the motion information of the autonomous driving vehicle) at the prior moment.

The information about the autonomous driving vehicle may be understood as information used to describe a status, a motion, and the like of the vehicle. The information about the autonomous driving vehicle may include the motion information of the autonomous driving vehicle, and the motion information of the autonomous driving vehicle may be understood as dynamics information, for example, may include any one or more pieces of dynamics information such as a vehicle speed or an angular speed (for example, a yaw angular speed) of the vehicle.

Optionally, the information about the autonomous driving vehicle may be obtained in real time or read from the storage apparatus by using the foregoing related apparatus or modules.

It should be noted that, in step 703, the first prediction value and the first detection information are comprehensively considered to determine the real-time mapping relationship, and a second prediction value is further determined. This is equivalent to determining a more accurate prediction value at the current moment (or may be understood as obtaining a more accurate lane line model) by using the lane line prediction value at the current moment and lane line detection information at the current moment. Assuming that the current moment is changed, the original prior moment is used as the current moment, and the original current moment is used as the next moment, that is, the time advances for one moment, step 702 is equivalent to obtaining a lane line prediction value at the next moment by using information about the autonomous driving vehicle at the current moment, and then determining a more accurate prediction value at the next moment by using lane line detection information in the image coordinate system at the next moment and lane line prediction value at the next moment (or this may be understood as obtaining a more accurate lane line model).

Optionally, in step 703, a homography matrix may be used to describe the mapping relationship between the image coordinate system and the vehicle coordinate system. In this case, a homography matrix at a moment may be used to indicate a mapping relationship at this moment between the image coordinate system and the vehicle coordinate system, that is, a real-time homography matrix may be used to indicate a real-time mapping relationship.

Optionally, one or more (at least one) homography matrices may be set.

In other words, the homography matrix may be calculated by using a prediction value of the lane line in the vehicle coordinate system and a pixel of the lane line. Optionally, the homography matrix at the current moment may be calculated by using the following method.

First, obtain an initial homography matrix, including: determining a location of the vehicle in an image, determining, in front of the vehicle, a plurality of known markers in the vehicle coordinate system, and calculating the homography matrix based on coordinate information of a vehicle body and the plurality of markers in the image. The initial homography matrix may also be understood as an initial value of the homography matrix, and is used to indicate an initial value of a homography relationship between the vehicle coordinate system and the image coordinate system.

For example, the vehicle is fixed at a position in a vehicle shed, more than four obvious marks 10 m to 50 m in front of the vehicle are marked by dotting (locations of these markers are known in the vehicle coordinate system), then a corresponding marker is found in the image through feature extraction, and a homography matrix between a local horizontal plane and the image is calculated based on coordinate information of the marker between the vehicle body and the image. It should be noted that, because a degree of freedom of the homography matrix is 8, each point has two coordinates constraints, x and y. Therefore, at least four points need to be marked by dotting.

It should be noted that the initial homography matrix does not need to be re-obtained each time, in other words, in a lane line tracking process, the initial homography matrix may be continuously used for a period of time after the initial homography matrix is obtained for the first time.

It should be further understood that the initial homography matrix is used to indicate an initial mapping relationship, namely, an initial value of the mapping relationship between the image coordinate system and the vehicle coordinate system.

Then, calculate the homography matrix at the current moment. The initial homography matrix may be transferred to an image plane (a plane determined by the image coordinate system) based on a lane line prediction value (for example, the first prediction value) in the vehicle coordinate system, to match with a lane line (for example, the first detection information) in the image plane. Then, a matching error is minimized, and a homography matrix of an area in front of the vehicle is finally obtained by using an iterative method. The homography matrix may alternatively be calculated in real time by area. With reference to FIG. 9, the following describes a method for obtaining a homography matrix in real time by using calculation of three homography matrices as an example. It should be understood that when only one homography matrix is set, the method shown in FIG. 9 is also applicable.

FIG. 9 is a schematic diagram of calculation process of a homography matrix according to an embodiment of this application. The following describes steps shown in FIG. 9.

Optionally, area division may be performed, and homography matrices of different areas may be calculated. For example, the front of the vehicle may be divided into a plurality of areas by distance, to obtain a plurality of homography matrices corresponding to the plurality of areas, where each of the plurality of areas corresponds to at least one homography matrix.

For further illustration, three areas, namely, an area of 0-20 m, an area of 20-50 m, and an area of 50-100 m, may be divided in front of the vehicle based on practice or test data. In this case, the three areas may respectively correspond to three homography matrices H0, H1, and H2, to be specific, the area of 0-20 m corresponds to the matrix H0, the area of 20-50 m corresponds to the matrix H1, and the area of 50-100 m corresponds to the matrix H2.

901: Obtain an initial homography matrix.

It should be noted that the initial homography matrix does not need to be re-obtained each time, and may be demarcated once after a period of time, for example, a week, a few weeks, a month, or a few months, by using the method provided above.

Optionally, when the area division is performed, initial homography matrices of H0, H1, and H2 may be separately obtained. However, it should be understood that when division is performed in another manner, an initial homography matrix of each area may still be obtained.

902: Obtain a first prediction value of a lane line in the vehicle coordinate system at a current moment.

Optionally, the first prediction value may be obtained by using the related method provided above, for example, by using the related method provided in step 701 shown in FIG. 7.

903: Obtain, based on the first prediction value and the initial homography matrix, a fourth prediction value corresponding to the first prediction value.

The fourth prediction value may be understood as a value used to indicate a corresponding value of the first prediction value in an initial mapping relationship, or may be understood as a corresponding value of the first prediction value in an initial image coordinate system. Because the initial homography matrix may be considered as being used to indicate a mapping relationship between a vehicle coordinate system plane and an initial image plane (the initial image coordinate system), the fourth prediction value is equivalent to a corresponding value of the first prediction value in the initial image plane. Step 903 may be further considered as that a lane line in the vehicle coordinate system is transferred to the initial image plane.

Optionally, the initial homography matrix may satisfy a formula $p' = Hp$, where $p'$ is used to represent coordinates that are in the initial image coordinate system and that correspond, by using the initial homography matrix, to a lane line obtained through IMM prediction, and is equivalent to the fourth prediction value; $p$ is used to represent a prediction value of a lane line model in the vehicle coordinate system, and may be understood as the first prediction value; and H denotes the initial homography matrix.

904: Determine a homography matrix at the current moment by using a difference between first detection information and the fourth prediction value.

Optionally, a loss function (cost function) may be constructed based on the coordinates that are of the lane line obtained through prediction and that are in the initial image coordinate system and coordinates of an original lane line in the image coordinate system at the current moment. For example, a pixel difference (which may be understood as a coordinate difference or a distance between the two) between the coordinates of the lane line obtained through detection and the coordinates of the original lane line may be used to construct the loss function.

Optionally, the loss function may be constructed by using a formula $f = \Sigma(p_{image}-p')$, where $f$ represents a function, a meaning of $p'$ is the same as that described in step 903, and $p_{image}$ is used to represent the lane line detection information that is in the image coordinate system and that is obtained by using the lane line detection method provided above.

The homography matrix at the current moment is obtained by minimizing the loss function and using an iterative method, for example, the foregoing H0, H1, and H2 are obtained. The homography matrix at the current moment may be used to represent the first mapping relationship, namely, the mapping relationship at the current moment between the image coordinate system and the vehicle coordinate system.

After the homography matrix at the current moment is obtained, the first prediction value may be transferred from the vehicle coordinate system to the image coordinate system by using the homography matrix at the current moment. When a plurality of homography matrices are included, for example, when a plurality of homography matrices are obtained through area division, homography matrices H0, H1, and H2 of, for example, three areas may be obtained by using the method shown in FIG. 9. Then, the prediction values of the lane line are transferred by area to the image coordinate system by using the three homography matrices.

It should be noted that, in a driving process of the vehicle, a road surface change is reflected as a change of a plane determined by an image and a change of the mapping relationship between the vehicle coordinate system and the image coordinate system, the initial homography matrix is equivalent to that the initial mapping relationship between the vehicle coordinate system and the image coordinate system is determined, and the homography matrix at the current moment is equivalent to that a mapping relationship at the current moment (real-time mapping relationship) between the vehicle coordinate system and the image coordinate system is determined. Therefore, in the method shown in FIG. 9, the loss function is constructed and minimized by using a difference between a corresponding value, of the prediction value of the lane line model, in the initial image coordinate system and a corresponding value, of the prediction value of the lane line model, in the image coordinate system at the current moment, and the mapping relationship at the current moment, namely, a real-time homography matrix, between the vehicle coordinate system and the image coordinate system is obtained in an iterative manner. It may also be understood that, in the method shown in FIG. 9, the loss function is constructed and minimized based on a difference between a corresponding value, of the prediction value of the lane line model, in the initial mapping relationship and a corresponding value, of the prediction value of the lane line model, in the mapping relationship at the current moment, and the real-time mapping relationship corresponding to the current moment is obtained in an iterative manner. However, it should be understood that a method for obtaining a homography matrix at another moment (or a mapping relationship at another moment) may be the same as a method for obtaining the homography matrix at the current moment, which is equivalent to that the "another moment" is considered as the "current moment", or it may be considered that the "current moment" in the foregoing steps is replaced with the "another moment".

704: Determine the second prediction value based on the first mapping relationship.

It should be noted that the second prediction value is used to indicate a correction value of the first prediction value, in other words, the second prediction value may be understood as a prediction value obtained after the first prediction value is corrected.

Optionally, a third prediction value may be first obtained based on the first mapping relationship and the first prediction value. The third prediction value is used to indicate a corresponding value of the first prediction value in the first mapping relationship. Optionally, the first prediction value may be transferred to the image coordinate system at the current moment by using the first mapping relationship (for example, by using the homography matrix at the current moment), to obtain the third prediction value corresponding to the first prediction value. The third prediction value is a corresponding value that is of the first prediction value, that is in the image coordinate system at the current moment, and that is determined based on the first prediction value and the first mapping relationship (for example, by using the homography matrix at the current moment).

Optionally, after the third prediction value is obtained, the third prediction value may be adjusted based on the first detection information, to obtain the second prediction value.

Optionally, a Mahalanobis distance between a pixel of a lane line corresponding to the prediction value (the third prediction value) of the lane line model in the image coordinate system at the current moment to which the first prediction value is transferred and a pixel of the lane line corresponding to original lane line detection information (the first detection information) in the image coordinate system may be calculated, and a lane line prediction value corresponding to a minimum Mahalanobis distance is used as a prediction value of the lane line model after correction (the second prediction value).

It should be noted that herein it is equivalent to corresponding at least one lane line in the vehicle coordinate system to each lane line in the image coordinate, so that information about a line with a minimum Mahalanobis distance is used as a measurement quantity this time. For example, it is assumed that two lane lines, a left lane line and a right lane line, may be obtained in the vehicle coordinate system, and there are three lane lines in the image coordinate system. In this case, two of the three lane lines can be respectively corresponded to the left lane line and the right lane line according to the foregoing method.

Optionally, the model of the lane line prediction algorithm may be further updated by using the second prediction value. When the updated model is used in a subsequent prediction process, a more accurate prediction value of the lane line model may be obtained.

Optionally, the lane line model in the vehicle coordinate system may be further updated based on the second prediction value.

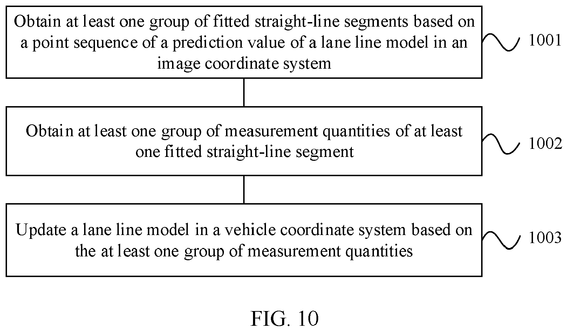

Optionally, the lane line model in the vehicle coordinate system may be updated by using the method shown in FIG. 10.

FIG. 10 is a schematic flowchart of a method for updating a lane line model in a vehicle coordinate system according to an embodiment of this application. The following describes the method with reference to the steps shown in FIG. 10.

1001: Obtain at least one group of fitted straight-line segments based on a point sequence of a prediction value of a lane line model in an image coordinate system.

Step 1001 is equivalent to calculating a projection, on the ground in a vehicle coordinate system, of a point sequence describing a lane line in an image.

Optionally, de-distortion processing may be first performed on the point sequence in the image, and then a de-distorted point sequence is transferred to a vehicle coordinate system by using a rotation translation matrix and a parameter of a camera (an image). The rotation translation matrix is a corresponding matrix when the image coordinate system is converted to the vehicle coordinate system.

Optionally, coordinates, corresponding to the point sequence in the image coordinate system, in the vehicle coordinate system may be obtained by using the following formulas:

$$(x_u, y_u) = f(x_d, y_d), \qquad (9)$$

$$\begin{bmatrix} x_w \\ y_w \end{bmatrix} = [R \,|\, T] * K^{-1} * \begin{bmatrix} x_u \\ y_u \end{bmatrix}, \qquad (10)$$

In the formulas, $x_d, y_d$ represents coordinates of a distorted point in the image; $x_u, y_u$ represents coordinates of a de-distorted point in the image; $x_w, y_w$ represents coordinates of a point that is in the image and that is projected on the ground in the vehicle coordinate system; K represents an intrinsic parameter matrix of the camera (image); and [R|T] represents the rotation translation matrix when the image coordinate system is converted to the vehicle coordinate system.

It should be noted that the formula (9) indicates that de-distortion processing is first performed on the point sequence in the image, and $f(x_d, y_d)$ may be understood as a processing operation performed on the distorted point ($x_d$, $y_d$) in the image, for example, may be a function. The foregoing formula (10) indicates that the coordinates of the de-distorted point in the image coordinate system are converted into coordinates in the vehicle coordinate system by using the rotation translation matrix between the image coordinate system and the vehicle coordinate system and the parameter corresponding to the camera. $K^{-1}$ represents performing inversion on the matrix K, or is referred to as an inverse matrix of the matrix K. It should be understood that the foregoing formulas (9) and (10) are merely examples, and another similar formula may be used to obtain a same or similar effect.

Then, point sequences of a lane line in the image may be fitted into at least one straight-line segment in the image.

1002: Obtain at least one group of measurement quantities of at least one fitted straight-line segment.

The measurement quantities include at least one of the following parameters of the straight-line segment: a slope, an intercept, or coordinates of a center point in the vehicle coordinate system.

Optionally, the point sequences of the lane line may be converted into groups each including three points, to fit a plurality of straight lines (or line segments) in the image coordinate system, to be specific, each group of points is fitted into a straight line, and a plurality of groups of measurement values of the plurality of straight lines are generated. For example, the following parameters of a straight line may be included: a slope, an intercept, and coordinates $x_w$ of an X axis of a center point (namely, a center point of each fitted line segment) in the vehicle coordinate system.

For example, it is assumed that coordinates of three points in a group (which may also be referred to as a set) are respectively ($x_0, y_0$), ($x_1, y_1$), and ($x_2, y_2$), where $y_0 < y_1 < y_2$. If $Y_{means}$ is used to represent a group of measurement quantities, $Y_{means}$ may include a slope, an intercept, and a projection of a center point (the $y_1$) in a slope direction that are of a straight line determined by the group of points. It is assumed that $Y_{means}$ [0] is used to represent the $0^{th}$ element of $Y_{means}$, $Y_{means}$ [1] is used to represent the $1^{st}$ element of $Y_{means}$, and so on.

In an example, $Y_{means}$ [0] and $Y_{means}$ [1] may be obtained by using the following formulas:

$$Y_{means}[1] = \frac{x_2 - x_0}{y_2 - y_0}, \qquad (11)$$

$$Y_{means}[0] = x_1 - Y_{means}[1] * y_1, \qquad (12)$$

It can be learned from the above formulas that the $1^{st}$ element in $Y_{means}$ is a slope of a straight line determined by the two points $(x_0, y_0)$ and $(x_2, y_2)$, and the $0^{th}$ element in $Y_{means}$ is a projection size of $(x_1, y_1)$ in the slope direction.

1003: Update a lane line model in the vehicle coordinate system based on the at least one group of measurement quantities.

Optionally, a relative relationship between the at least one group of measurement quantities and a prediction value obtained in the vehicle coordinate system may be established, to update the lane line model based on the relationship between the two. For example, the lane line model may be updated by using the relationship between the two and constructing a measurement residual covariance matrix.

Updating the lane line model may include updating parameters such as a slope and an intercept of the lane line model (lane line curve equation).

In the technical solution of this application, a prediction value of a lane line in the vehicle coordinate system and detection information of the lane line in the image coordinate system are combined, and a real-time mapping relationship between the two coordinate systems is obtained by using the prediction value and the detection information, so that impact of road surface changes can be eliminated. A reason is that these road surface changes cause a change in a mapping relationship between the two coordinate systems, and obtaining the mapping relationship in real time is equivalent to capturing the change in the mapping relationship in real time. In addition, updating a model of a lane line prediction algorithm in the vehicle coordinate system by using a more accurate prediction value of the lane line model is equivalent to updating a model parameter of the lane line prediction algorithm in the vehicle coordinate system in real time, so that convergence of a prediction algorithm can be accelerated, and when the model of the prediction algorithm is used to predict a lane line model, accuracy of the predicted lane line model can be improved. In addition, a more accurate mapping relationship between the two coordinate systems can be obtained by setting homography matrices by area, and precision or referred to as accuracy of lane line tracking can be further improved.

In addition to the foregoing technical effects, in the technical solution of this application, there is no need to assume that a road surface is smooth. Therefore, the method common to all urban roads. In addition, in the technical solution of this application, without being limited by an assumption of parallel lane lines, the method is also applicable to non-parallel lane lines, and therefore, has better generality or referred to as universality. In the conventional technology, only one lane line or a part of lane lines usually need to be tracked, and then remaining other lane lines are deduced based on a parallel assumption. Therefore, accuracy is relatively low, and when the lane lines are not parallel, lane line tracking may even fail. Excessively low tracking accuracy affects usage. However, in the technical solution of this application, tracking can be performed on all the lane lines, accuracy is higher, whether the lane lines are parallel does not need to be considered, and the method is universal.

Optionally, the prediction value of the lane line model obtained in the foregoing method may be further applied to another module or apparatus, to improve processing precision of the another module or apparatus. The following descriptions are performed by using an example in which the prediction value is applied to path planning and warning policy planning.

Optionally, the lane line tracking method in the embodiments of this application may be applied to path planning. A path planning method includes: obtaining path planning information, and generating a path planning solution in a next period of time or at a next moment based on the second prediction value and the path planning information. The path planning information may include at least one of road information, traffic information, or information about the autonomous driving vehicle. The road information may include at least one of roadblock information, road width information, or road length information. The traffic information may include at least one of traffic light information, traffic rule information, driving information of another surrounding vehicle, or road condition information. The information about the autonomous driving vehicle may include at least one of motion information, location information, shape information, or structure information of the autonomous driving vehicle. The motion information of the autonomous driving vehicle may include an angular speed, a speed, and the like of the vehicle. The location information may be understood as a current location of the vehicle. The shape information may be understood as a form, a shape, a size, and the like of the vehicle. The structure information may be understood as various components of the vehicle, for example, a vehicle head, a vehicle body, and the like.

Optionally, freespace information at the current moment may be further obtained, so that a lane-level path planning solution in the next period of time or at the next moment is determined based on the second prediction value, the path planning information, and the freespace information.

In the path planning method, a more accurate prediction value of the lane line model can be obtained by using the lane line tracking method provided in the embodiments of this application, so that accuracy of a planned path can be improved.

Optionally, the lane line tracking method in the embodiments of this application may be applied to a warning policy planning, and a warning policy planning includes: obtaining warning information, and generating a warning signal based on the second prediction value, the road information, and a preset warning threshold; and generating warning policy planning information based on the warning signal, where the warning policy planning information is used to indicate a response policy to the warning signal, and the warning information may include at least one of the location information of the vehicle, the traffic information, and the roadblock information.

In the warning policy planning method, a more accurate prediction value of the lane line model can be obtained by using the lane line tracking method provided in the embodiments of this application, so that accuracy of warning can be improved.

The lane line tracking method in the embodiments of this application is described above, and the lane line tracking apparatus in the embodiments of this application is described below. It should be understood that the lane line tracking apparatus described below can perform processes of the lane line tracking method in the embodiments of this application. When the apparatus embodiment is described below, repeated descriptions are appropriately omitted.

An embodiment of this application provides a lane line tracking apparatus. The apparatus includes an obtaining unit and a processing unit. The apparatus may be configured to perform the steps of the lane line tracking method in the embodiments of this application. For example, the obtaining unit may be configured to perform step 701 and step 702 in the method shown in FIG. 7, and the processing unit may be configured to perform step 703 and step 704 in the method shown in FIG. 7. For another example, the processing unit may be further configured to perform the steps in the method shown in FIG. 8. For another example, the processing unit may be further configured to perform the steps in the method shown in FIG. 9. For another example, the processing unit may be further configured to perform the steps in the method shown in FIG. 10.

When the obtaining unit is configured to perform step 701, assuming that step 702 is performed by using the method shown in FIG. 6, this case is equivalent to that the obtaining unit performs steps 601 to 603. However, it should be understood that step 702 may not be performed by using the method shown in FIG. 6. For example, the stored first detection information may be directly read from the storage apparatus, which is not enumerated herein.

Optionally, the obtaining unit may obtain the first prediction value through the following several implementations.

In one implementation, the obtaining unit may obtain the first prediction value by obtaining data such as the motion information of the autonomous driving vehicle at the prior moment and processing the obtained data.

Optionally, the obtaining unit may be configured to implement a function of the user interface 127 shown in FIG. 2 or configured to implement a function of the I/O interface 215 shown in FIG. 3, to perform the operation of obtaining the data such as the motion information of the autonomous driving vehicle at the prior moment. For example, as shown in FIG. 3, the I/O interface 215 may be used to obtain the data such as the motion information of the autonomous driving vehicle at the prior moment from the input device 217, the transceiver 223, and the like. In this case, the obtaining unit may be further configured to implement some functions of the control system 130 shown in FIG. 2 or configured to implement some functions of the processor 203 shown in FIG. 3, to perform the operation of processing the obtained data to obtain the first detection information. For example, the first prediction value is obtained through prediction by using the lane line prediction algorithm.

In another implementation, the obtaining unit may further directly obtain the first prediction value, for example, obtain the first prediction value from the storage apparatus. In this case, the obtaining unit may be configured to implement the function of the user interface 127 shown in FIG. 2 or configured to implement the function of the I/O interface 215 shown in FIG. 3, to perform the operation of obtaining the first prediction value.

Optionally, the obtaining unit may obtain the first detection information through the following several implementations.

In one implementation, the obtaining unit may obtain the first detection information by obtaining an image and processing the obtained image.

Optionally, the obtaining unit may be configured to implement a function of the camera 125 shown in FIG. 2 or configured to implement a function of the camera lens 255 shown in FIG. 3, to perform an operation of collecting the image. In this case, the obtaining unit may be further configured to implement some functions of the computer vision system 134 shown in FIG. 2 or configured to implement some functions of the processor 203 shown in FIG. 3, to perform an operation of processing the collected image to obtain the first detection information.

Optionally, the obtaining unit may be configured to implement the function of the user interface 127 shown in FIG. 2 or configured to implement the function of the I/O interface 215 shown in FIG. 3, to perform the operation of obtaining the image. For example, as shown in FIG. 3, the I/O interface 215 may be used to obtain the image from the input device 217, the media tray 221, the transceiver 223, the camera lens 255, or the like. In this case, the obtaining unit may be further configured to implement some functions of the computer vision system 134 shown in FIG. 2 or configured to implement some functions of the processor 203 shown in FIG. 3, to perform the operation of processing the obtained image to obtain the first detection information.

In another implementation, the obtaining unit may further directly obtain the first detection information, for example, obtain the first detection information from the storage apparatus. In this case, the obtaining unit may be configured to implement the function of the user interface 127 shown in FIG. 2 or configured to implement the function of the I/O interface 215 shown in FIG. 3, to perform the operation of obtaining the first detection information.

Optionally, the processing unit may be configured to perform processes such as predicting a lane line based on the information about the autonomous driving vehicle and determining a lane line tracking result based on a prediction value and detection information that is obtained from the image.

Optionally, the processing unit may be configured to implement a function of one or more of the computer vision system 134, the route control system 135, the obstacle avoidance system 136, or the like shown in FIG. 2, or configured to implement a function of the processor 203 shown in FIG. 3, to perform the operation of obtaining the lane line tracking result (for example, the foregoing second prediction value or the lane line model updated by using the second prediction value), an operation of performing path planning by using the lane line tracking result, an operation of performing warning policy planning by using the lane line tracking result, and the like.

An embodiment of this application provides a lane line tracking apparatus. The apparatus includes a memory, a processor, a communications interface, and a bus. Communication connections between the memory, the processor, and the communications interface are implemented through the bus.

Optionally, the memory may be a read-only memory (read only memory, ROM), a static storage device, a dynamic storage device, or a random access memory (random access memory, RAM). The memory may store a program. When the program stored in the memory is executed by the processor, the processor and the communications interface are configured to perform the steps of the lane line tracking method in the embodiments of this application.

Optionally, the memory may have a function of the memory 152 shown in FIG. 2, a function of the system memory 235 shown in FIG. 3, or a function of the memory 340 shown in FIG. 4, to implement the foregoing function of storing the program. Optionally, the processor may be a general-purpose CPU, a microprocessor, an ASIC, a graphics processing unit (graphic processing unit, GPU), or one or more integrated circuits, and is configured to execute a related program, to implement a function that needs to be performed by a unit in the lane line tracking apparatus in this embodiment of this application, or perform the steps of the lane line tracking method in the embodiments of this application.

Optionally, the processor may have a function of the processor 151 shown in FIG. 2, a function of the processor 203 shown in FIG. 3, or a function of the processor 330 shown in FIG. 4, to implement the foregoing function of executing the related program.

Optionally, the processor may alternatively be an integrated circuit chip, and has a signal processing capability. In an implementation process, the steps of the lane line tracking method in the embodiments of this application can be implemented by using a hardware integrated logic circuit or instructions in a form of software in the processor.

Optionally, the processor may alternatively be a general-purpose processor, a digital signal processor (digital signal processing, DSP), an application-specific integrated circuit (ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in the embodiments of this application. The general-purpose processor may be a microprocessor, or the processor may be any conventional processor or the like. The steps of the methods disclosed with reference to the embodiments of this application may be directly performed and completed by a hardware decoding processor, or may be performed and completed by a combination of hardware and software modules in a decoding processor. A software module may be located in a mature storage medium in the art, such as a random access memory, a flash memory, a read-only memory, a programmable read-only memory, an electrically erasable programmable memory, or a register. The storage medium is located in the memory. The processor reads information in the memory, and completes, in combination with hardware of the processor, a function that needs to be performed by a unit included in the lane line tracking apparatus in the embodiments of this application, or performs the steps of the lane line tracking method in the embodiments of this application.

The communications interface is a transceiver apparatus, for example, but not limited to a transceiver, to implement communication between the apparatus and another device or a communications network. For example, a first detection information may be obtained through the communications interface.

The bus may include a path for transmitting information between the components (for example, the memory, the processor, and the communications interface) of the apparatus.

An embodiment of this application further provides a computer program product including instructions. When the instructions are executed by a computer, the computer is enabled to implement the method in the foregoing method embodiments.

For explanations and beneficial effects of related content in any of the foregoing provided communications apparatuses, refer to corresponding method embodiments provided above, and details are not described herein again.

Unless otherwise defined, all technical and scientific terms used herein have the same meaning as commonly understood by a person skilled in the art to which this application pertains. The terms used in the specification of this application are merely for the purpose of describing specific embodiments, and are not intended to limit this application.

Optionally, a network device in the embodiments of this application includes a hardware layer, an operating system layer running on the hardware layer, and an application layer running on the operating system layer. The hardware layer may include hardware such as a CPU, a memory management unit (memory management unit, MMU), and a memory (also referred to as main memory). An operating system of the operating system layer may be any one or more of computer operating systems implementing service processing by using a process (process), for example, a Linux operating system, a Unix operating system, an Android operating system, an iOS operating system, or a Windows operating system. The application layer may include applications such as a browser, an address book, word processing software, and instant communications software.

A specific structure of an execution body of the method provided in the embodiments of this application is not specifically limited in the embodiments of this application, provided that a program that records code of the method provided in the embodiments of this application can be run to perform communication according to the method provided in the embodiments of this application. For example, the method provided in the embodiments of this application may be performed by a terminal device or a network device, or may be performed by a functional module that is in the terminal device or the network device and that can invoke and execute a program.

Aspects or features of this application may be implemented as a method, an apparatus or a product that uses standard programming and/or engineering technologies. The term "product" used in this application may cover a computer program that can be accessed from any computer-readable device, carrier or medium. For example, a computer-readable medium may include but is not limited to: a magnetic storage device (for example, a hard disk, a floppy disk or a magnetic tape), an optical disc (for example, a compact disc (compact disc, CD) and a digital versatile disc (digital versatile disc, DVD)), a smart card, and a flash memory device (for example, an erasable programmable read-only memory (erasable programmable read-only memory, EPROM), a card, a stick, or a key drive).

Various storage media described in this specification may represent one or more devices and/or other machine-readable media that are configured to store information. The term "machine-readable media" may include but is not limited to a radio channel, and various other media that can store, contain, and/or carry an instruction and/or data.

It should be noted that when the processor is a general-purpose processor, a DSP, an ASIC, an FPGA, or another programmable logic device, discrete gate, transistor logic device, or discrete hardware component, the memory (storage module) may be integrated into the processor.

It should be further noted that the memory described in this application is intended to include, but is not limited to, these memories and any other memory of a suitable type.

A person of ordinary skill in the art may be aware that, in combination with the examples described in the embodiments disclosed in this application, units and steps may be implemented by electronic hardware or a combination of computer software and electronic hardware. Whether the functions are performed by hardware or software depends on particular applications and design constraint conditions of the technical solution. A person skilled in the art may use different methods to implement the described functions for each particular application, but it should not be considered that the implementation goes beyond the protection scope of this application.

It may be clearly understood by a person skilled in the art that, for the purpose of convenient and brief description, for a detailed working process of the foregoing apparatus and unit, refer to a corresponding process in the foregoing method embodiments, and details are not described herein again.

In the several embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solution of the embodiments.

In addition, functional units in the embodiments of this application may be integrated into one unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solution of this application essentially, or the part contributing to the conventional technology, or all or a part of the technical solution may be implemented in the form of a computer software product. The computer software product is stored in a storage medium, and the computer software product includes several instructions. This instruction is used to cause a computer device to (which may be a personal computer, a server, or a network device) to perform all or some of the steps of the methods described in the embodiments of this application. The foregoing storage medium may include but is not limited to any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A lane line tracking method, comprising:

    obtaining a first prediction value, wherein the first prediction value is used to indicate a lane line model in a vehicle coordinate system, and the first prediction value is obtained through prediction by using motion information of an autonomous driving vehicle at a prior moment;
    obtaining first detection information, wherein the first detection information comprises a pixel of a lane line in an image coordinate system at a current moment;
    determining a first mapping relationship based on the first prediction value and the first detection information, wherein the first mapping relationship is used to indicate a real-time mapping relationship between the image coordinate system and the vehicle coordinate system; and
    determining a second prediction value based on the first mapping relationship, wherein the second prediction value is used to indicate a correction value of the first prediction value.

2. The method according to claim 1, wherein the determining a second prediction value based on the first mapping relationship comprises:

    obtaining a third prediction value based on the first mapping relationship and the first prediction value, wherein the third prediction value is used to indicate a corresponding value of the first prediction value in the first mapping relationship; and
    adjusting the third prediction value by using the first detection information, to obtain the second prediction value.

3. The method according to claim 1 or 2, wherein the determining a first mapping relationship based on the first prediction value and the first detection information comprises:

    obtaining a fourth prediction value based on the first prediction value and an initial homography matrix, wherein the initial homography matrix is used to indicate an initial mapping relationship between the image coordinate system and the vehicle coordinate system, and the fourth prediction value is used to indicate a corresponding value of the first prediction value in the initial mapping relationship; and
    determining a real-time homography matrix based on the first detection information and the fourth prediction value, wherein the real-time homography matrix is used to indicate the first mapping relationship.

4. The method according to claim 3, wherein the method further comprises:

    dividing the front of the vehicle into a plurality of areas by distance; and
    obtaining a plurality of the real-time homography matrices corresponding to the plurality of areas, wherein each of the plurality of areas corresponds to at least one of the real-time homography matrices.

5. The method according to any one of claims 1 to 4, wherein the first prediction value is obtained by using a model of a lane line prediction algorithm, and the method further comprises:
updating the model of the lane line prediction algorithm based on the second prediction value.

**6.** The method according to any one of claims 1 to 5, wherein the method further comprises:
obtaining the first prediction value when a time interval between the current moment and the prior moment falls within a preset range.

**7.** The method according to any one of claims 1 to 6, wherein the method further comprises:

obtaining path planning information, wherein the path planning information comprises at least one of road information, traffic information, or information about the autonomous driving vehicle, wherein the road information comprises at least one of roadblock information, road width information, or road length information, the traffic information comprises at least one of traffic light information, traffic rule information, driving information of another surrounding vehicle, or road condition information, and the information about the autonomous driving vehicle comprises at least one of motion information, location information, shape information, or structure information of the autonomous driving vehicle; and
generating a path planning solution in a next period of time or at a next moment based on the second prediction value and the path planning information.

**8.** The method according to claim 7, wherein the method further comprises:

obtaining freespace information at the current moment; and
determining a lane-level path planning solution in the next period of time or at the next moment based on the second prediction value, the path planning information, and the freespace information.

**9.** The method according to any one of claims 1 to 6, wherein the method further comprises:

obtaining warning information, wherein the warning information comprises at least one of location information of the vehicle, traffic information, and roadblock information;
generating a warning signal based on the second prediction value, the road information, and a preset warning threshold; and
generating warning policy planning information based on the warning signal, wherein the warning policy planning information is used to indicate a response policy to the warning signal.

**10.** A lane line tracking apparatus, comprising:

an obtaining unit, configured to obtain a first prediction value, wherein the first prediction value is used to indicate a lane line model in a vehicle coordinate system, and the first prediction value is obtained through prediction by using motion information of an autonomous driving vehicle at a prior moment; and
the obtaining unit is further configured to obtain first detection information, wherein the first detection information comprises a pixel of a lane line in an image coordinate system at a current moment; and
a processing unit, configured to determine a first mapping relationship based on the first prediction value and the first detection information, wherein the first mapping relationship is used to indicate a real-time mapping relationship between the image coordinate system and the vehicle coordinate system; and
the processing unit is further configured to determine a second prediction value based on the first mapping relationship, wherein the second prediction value is used to indicate a correction value of the first prediction value.

**11.** The apparatus according to claim 10, wherein the processing unit is specifically configured to:

obtain a third prediction value based on the first mapping relationship and the first prediction value, wherein the third prediction value is used to indicate a corresponding value of the first prediction value in the first mapping relationship; and
adjust the third prediction value by using the first detection information, to obtain the second prediction value.

**12.** The apparatus according to claim 10 or 11, wherein the processing unit is specifically configured to:

obtain a fourth prediction value based on the first prediction value and an initial homography matrix, wherein the initial homography matrix is used to indicate an initial mapping relationship between the image coordinate system and the vehicle coordinate system, and the fourth prediction value is used to indicate a corresponding value of the first prediction value in the initial mapping relationship; and
determine a real-time homography matrix based on the first detection information and the fourth prediction value, wherein the real-time homography matrix is used to indicate the first mapping relationship.

13. The apparatus according to claim 12, wherein the processing unit is further configured to:

divide the front of the vehicle into a plurality of areas by distance; and
obtain a plurality of the real-time homography matrices corresponding to the plurality of areas, wherein each of the plurality of areas corresponds to at least one of the real-time homography matrices.

14. The apparatus according to any one of claims 10 to 13, wherein the first prediction value is obtained by using a model of a lane line prediction algorithm, and the processing unit is further configured to update the model of the lane line prediction algorithm based on the second prediction value.

15. The apparatus according to any one of claims 10 to 14, wherein the first prediction value is obtained when a time interval between the current moment and the prior moment falls within a preset range.

16. The apparatus according to any one of claims 10 to 15, wherein the obtaining unit is further configured to obtain path planning information, and the path planning information comprises at least one of road information, traffic information, or information about the autonomous driving vehicle, wherein the road information comprises at least one of roadblock information, road width information, or road length information, the traffic information comprises at least one of traffic light information, traffic rule information, driving information of another surrounding vehicle, or road condition information, and the information about the autonomous driving vehicle comprises at least one of motion information, location information, shape information, or structure information of the autonomous driving vehicle; and
the processing unit is further configured to generate a path planning solution in a next period of time or at a next moment based on the second prediction value and the path planning information.

17. The apparatus according to claim 16, wherein the obtaining unit is further configured to obtain freespace information at the current moment; and
the processing unit is further configured to determine a lane-level path planning solution in the next period of time or at the next moment based on the second prediction value, the path planning information, and the freespace information.

18. The apparatus according to any one of claims 10 to 15, wherein the obtaining unit is further configured to obtain warning information, and the warning information comprises at least one of location information of the vehicle, traffic information, and roadblock information; and
the processing unit is further configured to:

generate a warning signal based on the second prediction value, the road information, and a preset warning threshold; and
generate warning policy planning information based on the warning signal, wherein the warning policy planning information is used to indicate a response policy to the warning signal.

19. A chip, wherein the chip comprises a processor and a data interface, and the processor reads, through the data interface, instructions stored in a memory, to perform the method according to any one of claims 1 to 9.

20. A computer-readable storage medium, wherein the computer-readable medium stores program code to be executed by a device, and the program code comprises instructions used to perform the method according to any one of claims 1 to 9.

FIG. 1

Vehicle 100

Travel system 110

Engine 111

Transmission device 112

Energy source 113

Wheel 114

Sensing system 120

Positioning system 121

Inertial measurement unit 122

Radar 123

Laser rangefinder 124

Camera 125

Control system 130

Steering system 131

Throttle 132

Brake unit 133

Computer vision system 134

Route control system 135

Obstacle avoidance system 136

Peripheral device 140

Wireless communications system 141

Vehicle-mounted computer 142

Microphone 143

Speaker 144

Processor 151

Instruction 153

Memory 152

Computer system 150

Power supply 160

User interface 170

FIG. 2

System
memory 235

Operating
system 237

Shell 239

Kernel 241

Application 243

Autonomous
driving related
program
247

203

Processor

233

Hard disk drive

231

Hard disk drive
interface

System bus 205

Bus bridge 211

207

Display
adapter

I/O bus

215 225

I/O interface USB port

253

229

Network
interface

Display

209

Input
device

Media
tray

Transc
eiver

Sensor

249

227

Network

Software
deployment
server

217

221

223

Camera
lens

255

201

FIG. 3

320  330  340  350  360

Server | Processor | Memory | Instruction | data

320

Computer system 312

FIG. 4

500

| Sensing module 510 | Lane line detection module 520 | Lane line tracking module 530 | Other modules |
|---|---|---|---|
| Image collection | Line type classification of lane lines | Lane line prediction | Freespace detection module |
| | Lane line pixel extraction | Model updating | Traffic rule control module |

FIG. 5

Perform feature extraction on a to-be-processed image, to obtain feature information of a lane line in the to-be-processed image ～ 601

Perform classification based on the feature information of the lane line, to obtain a line type of the lane line ～ 602

Obtain a pixel of the lane line ～ 603

FIG. 6

Obtain a first prediction value, where the first prediction value is used to indicate a lane line model in a vehicle coordinate system ～ 701

Obtain first detection information, where the first detection information includes a pixel of a lane line in an image coordinate system at a current moment ～ 702

Determine a first mapping relationship based on the first prediction value and the first detection information ～ 703

Determine a second prediction value based on the first mapping relationship ～ 704

FIG. 7

Determine whether to perform predication based on a time interval ⌇ 801

Obtain a prediction value based on information about an autonomous driving vehicle by using a filter ⌇ 802

FIG. 8

Obtain an initial homography matrix ⌇ 901

Obtain a first prediction value of a lane line in a vehicle coordinate system at a current moment ⌇ 902

Obtain, based on the first prediction value and the initial homography matrix, a fourth prediction value corresponding to the first prediction value ⌇ 903

Determine a homography matrix at the current moment by using a difference between first detection information and the fourth prediction value ⌇ 904

FIG. 9

Obtain at least one group of fitted straight-line segments based on a point sequence of a prediction value of a lane line model in an image coordinate system    1001

Obtain at least one group of measurement quantities of at least one fitted straight-line segment    1002

Update a lane line model in a vehicle coordinate system based on the at least one group of measurement quantities    1003

FIG. 10

## INTERNATIONAL SEARCH REPORT

| International application No. |
|---|
| **PCT/CN2020/087506** |

### A. CLASSIFICATION OF SUBJECT MATTER

G06K 9/00(2006.01)i

According to International Patent Classification (IPC) or to both national classification and IPC

### B. FIELDS SEARCHED

Minimum documentation searched (classification system followed by classification symbols)

G06K, G08G, G06T

Documentation searched other than minimum documentation to the extent that such documents are included in the fields searched

Electronic data base consulted during the international search (name of data base and, where practicable, search terms used)

DWPI; CNABS; CNTXT; SIPOABS; CNKI: 车道线, 跟踪, 预测, 模型, 检测, 当前, 像素, 坐标, 映射, 校正, 修订, 区域, 除法, 矩阵, lane line, tracking, prediction, model, detection, current, pixel, coordinate, mapping, correction, revision, area, division, matrix

### C. DOCUMENTS CONSIDERED TO BE RELEVANT

| Category* | Citation of document, with indication, where appropriate, of the relevant passages | Relevant to claim No. |
|---|---|---|
| Y | CN 103971521 A (TSINGHUA UNIVERSITY et al.) 06 August 2014 (2014-08-06) description paragraphs [0036] to [0115] | 1, 5-10, 14-20 |
| Y | CN 109409205 A (SOUTHEAST UNIVERSITY) 01 March 2019 (2019-03-01) description paragraphs [0006] to [0059] | 1, 5-10, 14-20 |
| A | CN 109948552 A (SICHUAN UNIVERSITY) 28 June 2019 (2019-06-28) entire document | 1-20 |
| A | CN 106842231 A (CHANG'AN UNIVERSITY) 13 June 2017 (2017-06-13) entire document | 1-20 |
| A | WO 2019224103 A1 (CONNAUGHT ELECTRONICS LTD.) 28 November 2019 (2019-11-28) entire document | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 December 2020** | **29 December 2020** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/087506**

| Patent document cited in search report | | | Publication date (day/month/year) | Patent family member(s) | | | Publication date (day/month/year) |
|---|---|---|---|---|---|---|---|
| CN | 103971521 | A | 06 August 2014 | CN | 103971521 | B | 29 June 2016 |
| CN | 109409205 | A | 01 March 2019 | None | | | |
| CN | 109948552 | A | 28 June 2019 | None | | | |
| CN | 106842231 | A | 13 June 2017 | CN | 106842231 | B | 22 March 2019 |
| WO | 2019224103 | A1 | 28 November 2019 | DE | 102018112177 | A1 | 28 November 2019 |

Form PCT/ISA/210 (patent family annex) (January 2015)